# EUROPEAN PATENT APPLICATION

(11) **EP 4 787 159 A1**
(43) Date of publication of application: **05.08.2026**
(21) Application number: 24870507.1
(22) Date of filing: 14.09.2024
(51) Int. Cl.: G06F 9/451, G06F 3/0484

(54) **DATA PROCESSING METHOD AND APPARATUS**

(30) Priority: 28.09.2023 CN 202311285270
(71) Applicant: HUAWEI TECHNOLOGIES CO., LTD., Shenzhen 518129 (CN)
(72) Inventor: ZHOU, Xiaoyun, Shenzhen, Guangdong 518129 (CN); ZHANG, Yongjing, Shenzhen, Guangdong 518129 (CN)
(74) Representative: Gill Jennings & Every LLP
(86) International application number: PCT/CN2024/119214
(87) International publication number: WO 2025/066963

(57) **Abstract**

Embodiments of this application provide a data processing method and apparatus, and relate to the field of communication technologies. A terminal may obtain a service list from a service list server, where the service list includes service information of a virtual image service. Then the terminal may access the virtual image service based on the service information. According to the method provided in this application, the virtual image service may be obtained through DVB, to further improve service experience of a user.

## Description

### CROSS-REFERENCE TO RELATED APPLICATIONS

This application claims priority to Chinese Patent Application No. 202311285270.7, filed with the China National Intellectual Property Administration on September 28, 2023 and entitled "DATA PROCESSING METHOD AND APPARATUS", which is incorporated herein by reference in its entirety.

### TECHNICAL FIELD

Embodiments of this application relate to the field of communication technologies, and in particular, to a data processing method and apparatus.

### BACKGROUND

A digital human (Digital Human/Meta Human) is a digital image that is created by using a digital technology and that is similar to a human image. The digital human provides anthropomorphic services by breaking physical boundaries, is ultra-realistic and highly interactive, and is a future development trend.

Digital video broadcasting (digital video broadcasting, DVB) is a series of internationally recognized public standards for digital television that are maintained by the DVB project. The DVB standards provide a set of complete digital television system specifications applicable to different media. Digital video broadcasting-internet (digital video broadcasting-internet, DVB-I) is a mechanism defined in the DVB to obtain a service in a plurality of transmission modes after the service is discovered through the Internet. The existing DVB does not support a digital human service, and no solution is provided for specifically providing a digital human service through the DVB.

### SUMMARY

This application provides a data processing method and apparatus, to provide a digital human service through DVB.

According to a first aspect, this application provides a data processing method. The method may be applied to a terminal. The terminal may be understood as a mobile phone, a computer, a set-top box, or the like. In a DVB system, the terminal is equivalent to a DVB-client (client). This is merely an example for description, and a form of the terminal is not specifically limited herein. The method is performed as follows:
obtaining a service list, where the service list includes service information of a virtual image service; and accessing the virtual image service based on the service information.

It should be noted that the virtual image service in this application may be understood as a digital human service, a virtual pet service, a virtual space service, or the like. This is not specifically limited in this application. A service list server in this application may be understood as a service list server of the DVB system, or may be understood as a server of another service system. This is not specifically limited herein.

In this application, the terminal may obtain the service information of the virtual image service from the service list server of the DVB system, and request, based on the service information, the virtual image service from a device associated with the virtual image service person, to access the virtual image service. In this manner, the terminal may obtain the virtual image service.

In an optional manner, the service information includes at least one of the following information: service type indication information of the virtual image service, service instance information of the virtual image service, and linked-application information of the virtual image service.

In this application, the service type indication information of the virtual image service may be a digital human, a cartoon digital human, or the like. This is merely an example for description, and does not constitute a specific limitation. The service instance information of the virtual image service may indicate access address information of the virtual image service or the like. The linked-application information of the virtual image service may be information about an application that needs to be installed on the terminal, and the virtual image service can be accessed only based on installation of the application. In this application, the service type indication information of the virtual image service, the service instance information of the virtual image service, and the linked-application information of the virtual image service are configured in the service information, to ensure that the DVB system supports the virtual image service, so that the terminal can access the virtual image service and receive a service of the virtual image service.

In an optional manner, when the service information includes the service instance information, the service instance information includes an uplink delivery parameter, and the uplink delivery parameter includes destination address information of uplink data.

In this application, when the service instance information includes the uplink delivery parameter and the uplink delivery parameter includes the destination address information of the uplink data, the terminal may learn of an address to which a virtual image service request is to be sent, that is, a destination address of the uplink data, and send the virtual image service request to a service provider based on the destination address of the uplink data, so that the service provider generates a virtual image according to the virtual image service request.

In an optional manner, the uplink transmission parameter further includes a transport protocol supported by the uplink data and/or a media type supported by the uplink data.

In this application, the transport protocol supported by the uplink data is configured in the uplink transmission parameter, so that a protocol to be used to transmit virtual image service request data can be known; and a media type, for example, audio, a video, or text, supported by the virtual image service request data is configured in the uplink transmission parameter, so that a media type of data to be used to transmit the virtual image service request data can be known.

In an optional manner, in addition to the uplink delivery parameter, the service instance information further includes a service access parameter, and the service access parameter includes address information for accessing service data of the virtual image service.

In this application, when the service instance information includes the uplink delivery parameter and the service access parameter, the terminal may learn of a download address of a virtual image, that is, an address for accessing the service data of the virtual image service, and send a virtual image obtaining request to a service provider based on the address for accessing the service data of the virtual image service, so that the service provider generates the virtual image and then returns the virtual image to the address for accessing the service data of the virtual image service.

In an optional manner, when the service information includes the service instance information, the service instance information includes a service access parameter, and the service access parameter includes address information for accessing service data of the virtual image service.

In this application, when the service instance information includes the service access parameter (the service access parameter is understood as an access parameter of bidirectional communication, to be specific, a parameter that supports both transmission of virtual image request data and downloading of virtual image service data), the terminal may learn of an address to which a virtual image service request is to be sent and a download address of a virtual image, and send a virtual image obtaining request to a service provider based on the address for accessing the service data of the virtual image service, so that the service provider generates the virtual image and then returns the virtual image to the address for accessing the service data of the virtual image service.

In an optional manner, when the service information includes the service instance information and the linked-application information of the virtual image service, the service instance information includes a service access parameter, and the service access parameter includes address information for accessing service data of the virtual image service.

In this application, when the service information includes the service instance information and the linked-application information of the virtual image service, the terminal may send a virtual image service obtaining request to a service provider based on a linked application of the virtual image service, determine a download address of a virtual image based on the service access parameter in the service instance information, and then request, based on the download address, to obtain the virtual image.

In an optional manner, the service access parameter further includes a transport protocol supported by the service data and/or a media type supported by the service data.

In this application, the transport protocol supported by the service data is configured in the service access parameter, so that a protocol to be used to transmit virtual image service request data can be known; and the media type, for example, audio, a video, or text, supported by the service data is configured in the service access parameter, so that a media type of data to be used to transmit the virtual image service can be known.

In an optional manner, accessing the virtual image service based on the service information includes: The terminal sends a first message based on the service information, where the first message is used to request the virtual image service; and receives a response message for the first message.

In this application, the terminal may learn of, based on the service information, an address to which a virtual image service request is to be sent, and the terminal may send the first message to the address to request the virtual image service, to obtain a service of the virtual image service.

In an optional manner, the first message includes at least one of the following information: a user identifier, a device identifier, user preference information, a virtual image type selected by a user, and a language selected by the user.

The user identifier may be understood as a user identifier of a DVB-I client, and the identifier may identify identity information, network access information, or the like of the DVB-I client. This is merely an example for description. The device identifier is an identifier or an IP address of a device on which the DVB-I client resides. The user preference information is usually information collected based on a historical operation habit of the user or a parameter that is set by the user. For example, if the user likes to watch a live sports program when watching live broadcast, a digital human server may recommend a digital human wearing a sports suit. The virtual image type selected by the user may be a digital human of a cartoon image or the like. The language selected by the user may be Chinese, English, Korean, or the like, or may be sign language. These are merely examples for description, and the request message is not specifically limited.

In an optional manner, the terminal further sends a second message based on the service information, where the second message includes user expression information collected by the terminal; and receives a response message for the second message.

In this application, the terminal may learn of, based on the service information, an address to which a virtual image service request is to be sent, and the terminal may send the second message to the address to interact with a virtual image generated by a service requester.

In an optional manner, the user expression information includes at least one of the following information: audio information, video information, and text information.

In an optional manner, the terminal further receives first service data of the virtual image service, where the first service data is service data generated by a virtual image service server based on the first message; and plays a service based on the first service data.

In an optional manner, the terminal further sends a third message to the address information for accessing the service data of the virtual image service; and receives a response message for the third message, where the response message includes the first service data.

In an optional manner, the terminal further sends a fourth message to the address information for accessing the service data of the virtual image service; receives a response message for the fourth message, where the response message for the fourth message includes a media presentation description file of the virtual image service; and requests the first service data based on the media presentation description file.

In an optional manner, the terminal further receives second service data of the virtual image service, where the second service data is service data generated by a virtual image service server based on the second message; and plays a service based on the second service data.

In an optional manner, the terminal further sends a third message to the address information for accessing the service data of the virtual image service; and receives a response message for the third message, where the response message includes the second service data.

In an optional manner, the terminal further sends a fourth message to the address information for accessing the service data of the virtual image service; receives a response message for the fourth message, where the response message for the fourth message includes a media presentation description file of the virtual image service; and requests the second service data based on the media presentation description file.

In an optional manner, when the service information includes the linked-application information of the virtual image service, the terminal further activates a linked application of the virtual image service.

In an optional manner, the service type indication information includes at least one of the following indication information: a digital human, a 2D digital human, a 3D digital human, a digital human of a cartoon image, a digital human of a real-person image, a custom digital human, and a digital human of sign language.

According to a second aspect, this application provides a data processing method. The method is applied to a first server. The first server may be a virtual image service manufacturer, an operator, or the like. In a DVB system, the first server is equivalent to a content/service provider(s) (content/service provider). This is merely an example for description, and a form of the first server is not specifically limited herein. The method is performed as follows:
receiving first information, where the first information is used to request a virtual image service; generating first service data of the virtual image service based on the first information; and providing the first service data.

In this application, after receiving the first information, the service provider generates the first service data of the virtual image service based on the first information, and provides the first media data, to provide a service of the virtual image service.

In an optional manner, the first information includes at least one of the following information: a user identifier, a device identifier, user preference information, a virtual image type selected by a user, and a language selected by the user.

In an optional manner, the service provider further configures a service list of a service list server, where the service list includes service information of the virtual image service.

In an optional manner, the service information includes at least one of the following information: service type indication information of the virtual image service, service instance information of the virtual image service, and linked-application information of the virtual image service.

In an optional manner, when the service information is the service instance information, the service instance information includes an uplink delivery parameter, and the uplink delivery parameter includes destination address information of uplink data.

In an optional manner, the uplink transmission parameter further includes a transport protocol supported by the uplink data and/or a media type supported by the uplink data.

In an optional manner, the service instance information further includes a service access parameter, and the service access parameter includes address information for accessing service data of the virtual image service.

In an optional manner, when the service information includes the service instance information, the service instance information includes a service access parameter, and the service access parameter includes address information for accessing service data of the virtual image service.

In an optional manner, when the service information includes the service instance information and the linked-application information of the virtual image service, the service instance information includes a service access parameter, and the service access parameter includes address information for accessing service data of the virtual image service.

In an optional manner, the service access parameter further includes a transport protocol supported by the service data and/or a media type supported by the service data.

In an optional manner, the first server further receives second information, where the second information includes user expression information; generates second service data of the virtual image service based on the second information; and provides the second media data.

In an optional manner, the user expression information includes at least one of the following information: audio information, video information, and text information.

In an optional manner, the service type indication information includes at least one of the following indication information: a digital human, a 2D digital human, a 3D digital human, a digital human of a cartoon image, a digital human of a real-person image, a custom digital human, and a digital human of sign language.

According to a third aspect, this application provides a data processing method. The method may be performed through data exchange between a terminal, a first service server, and another device. The terminal may be understood as a mobile phone, a computer, a set-top box, or the like. In a DVB system, the terminal is equivalent to a DVB-client (client). This is merely an example for description. The service provider may be a virtual image service manufacturer, an operator, or the like. In the DVB system, the service provider is equivalent to a content/service provider(s) (content/service provider). This is merely an example for description. The method is performed as follows:

The terminal obtains a service list from a service list server, where the service list includes service information of a virtual image service. The terminal sends first information to the first server of the virtual image service based on the service information, where the first information is used to request the virtual image service. The first server generates first service data of the virtual image service based on the first information. The first server provides the first service data for the terminal. The terminal plays a service based on the first service data.

In an optional manner, that the first server provides the first service data for the terminal includes: The first server stores the first service data, where a first address at which the first service data is stored corresponds to address information, obtained by the terminal, for accessing service data of the virtual image service. The terminal obtains the first service data from the first address.

In an optional manner, that the terminal obtains the first service data from the first address includes: The terminal sends a third message based on the address information for accessing the service data of the virtual image service. The terminal receives a response message for the third message, where the response message includes the first service data.

In an optional manner, that the first server provides the first service data includes: The first server stores a media presentation file generated when the first service data is segmented, where a second address of the media presentation file corresponds to address information, obtained by the terminal, for accessing service data of the virtual image service; and the first server further stores a segment of the first service data, where a third address at which the segment of the first service data is stored corresponds to an address described in the media presentation file. The terminal sends a fourth message based on the address information for accessing the service data of the virtual image service. The terminal receives a response message for the fourth message, where the response message includes the media presentation description file. The terminal requests the first service data based on the media presentation description file.

In an optional manner, that the first server provides the first service data includes: The first server stores the first service data, where a fourth address at which the first service data is stored corresponds to address information, obtained by the terminal, for accessing service data of the virtual image service; determines the terminal based on the address information for accessing the service data of the virtual image service; and sends the first service data to the terminal based on the address information for accessing the service data of the virtual image service.

In an optional manner, the terminal sends second information to the first server based on the service information, where the second information includes user expression information collected by the terminal; the first server generates second service data of the virtual image service based on the second information; the first server provides the second service data for the terminal; and the terminal plays a service based on the second service data.

In an optional manner, that the first server provides the second service data for the terminal includes: The first server stores the second service data, where a first address at which the second service data is stored corresponds to address information, obtained by the terminal, for accessing service data of the virtual image service. The terminal sends a third message based on the address information for accessing the service data of the virtual image service. The terminal receives a response message for the third message, where the response message includes the second service data.

In an optional manner, that the first server provides the second service data includes: The first server stores a media presentation file generated when the second service data is segmented, where a second address of the media presentation file corresponds to address information, obtained by the terminal, for accessing service data of the virtual image service; and the first server further stores a segment of the second service data, where a third address at which the segment of the second service data is stored corresponds to an address described in the media presentation file. The terminal sends a fourth message based on the address information for accessing the service data of the virtual image service. The terminal receives a response message for the fourth message, where the response message includes the media presentation description file. The terminal requests the second service data based on the media presentation description file.

In an optional manner, that the first server provides the second service data includes: The first server stores the second service data, where a fourth address at which the second service data is stored corresponds to address information, obtained by the terminal, for accessing service data of the virtual image service; determines the terminal based on the address information for accessing the service data of the virtual image service; and sends the second service data to the terminal based on the address information for accessing the service data of the virtual image service.

In an optional manner, the service information includes at least one of the following information: service type indication information of the virtual image service, service instance information of the virtual image service, and linked-application information of the virtual image service.

In an optional manner, when the service information includes the service instance information, the service instance information includes an uplink delivery parameter, and the uplink delivery parameter includes destination address information of uplink data.

In an optional manner, the service instance information further includes a service access parameter, and the service access parameter includes the address information for accessing the service data of the virtual image service.

In an optional manner, when the service information includes the service instance information, the service instance information includes a service access parameter, and the service access parameter includes the address information for accessing the service data of the virtual image service.

In an optional manner, when the service information includes the service instance information and the linked-application information of the virtual image service, the service instance information includes a service access parameter, and the service access parameter includes the address information for accessing the service data of the virtual image service.

In an optional manner, when the service information includes the linked-application information of the virtual image service, a linked application, installed on the terminal, of the virtual image service is activated.

In an optional manner, the first message includes at least one of the following information: a user identifier, a device identifier, user preference information, a virtual image type selected by a user, and a language selected by the user.

According to a fourth aspect, this application provides a data processing apparatus, including a transceiver unit and a processing unit.

The transceiver unit is configured to obtain a service list from a service list server, where the service list includes service information of a virtual image service. The processing unit is configured to access the virtual image service based on the service information.

In an optional manner, the service information includes at least one of the following information: service type indication information of the virtual image service, service instance information of the virtual image service, and linked-application information of the virtual image service.

In an optional manner, when the service information includes the service instance information, the service instance information includes an uplink delivery parameter, and the uplink delivery parameter includes destination address information of uplink data.

In an optional manner, the uplink transmission parameter further includes a transport protocol supported by the uplink data and/or a media type supported by the uplink data.

In an optional manner, in addition to the uplink delivery parameter, the service instance information further includes a service access parameter, and the service access parameter includes address information for accessing service data of the virtual image service.

In an optional manner, when the service information includes the service instance information, the service instance information includes a service access parameter, and the service access parameter includes address information for accessing service data of the virtual image service.

In an optional manner, when the service information includes the service instance information and the linked-application information of the virtual image service, the service instance information includes a service access parameter, and the service access parameter includes address information for accessing service data of the virtual image service.

In an optional manner, the service access parameter further includes a transport protocol supported by the service data and/or a media type supported by the service data.

In an optional manner, the transceiver unit is specifically configured to: send a first message based on the service information, where the first message is used to request the virtual image service; and receive a response message for the first message.

In an optional manner, the first message includes at least one of the following information: a user identifier, a device identifier, user preference information, a virtual image type selected by a user, and a language selected by the user.

In an optional manner, the transceiver unit is further configured to: send a second message based on the service information, where the second message is used for real-time interaction with the virtual image service, and the second message includes received user expression information; and receive a response message for the second message.

In an optional manner, the user expression information includes at least one of the following information: audio information, video information, and text information.

In an optional manner, the transceiver unit is further configured to receive first service data of the virtual image service, where the first service data is service data generated by a virtual image service server based on the first message; and the processing unit is further configured to play a service based on the first service data.

In an optional manner, the transceiver unit is further configured to: send a third message to the address information for accessing the service data of the virtual image service; and receive a response message for the third message, where the response message includes the first service data.

In an optional manner, the transceiver unit is further configured to: send a fourth message to the address information for accessing the service data of the virtual image service; and receive a response message for the fourth message, where the response message for the fourth message includes a media presentation description file of the virtual image service; and the processing unit is further configured to request the first service data based on the media presentation description file.

In an optional manner, the transceiver unit is further configured to receive second service data of the virtual image service, where the second service data is service data generated by a virtual image service server based on the second message; and the processing unit is further configured to play a service based on the second service data.

In an optional manner, the transceiver unit is further configured to receive second service data of the virtual image service, where the second service data is service data generated by a virtual image service server based on the first message; and the processing unit is further configured to play a service based on the second service data.

In an optional manner, the transceiver unit is further configured to: send a third message to the address information for accessing the service data of the virtual image service; and receive a response message for the third message, where the response message includes the second service data.

In an optional manner, the transceiver unit is further configured to: send a fourth message to the address information for accessing the service data of the virtual image service; and receive a response message for the fourth message, where the response message for the fourth message includes a media presentation description file of the virtual image service; and the processing unit is further configured to request the second service data based on the media presentation description file.

In an optional manner, when the service information includes the linked-application information of the virtual image service, the processing unit is further configured to activate a linked application of the virtual image service.

In an optional manner, the service type indication information includes at least one of the following indication information: a digital human, a 2D digital human, a 3D digital human, a digital human of a cartoon image, a digital human of a real-person image, a custom digital human, and a digital human of sign language.

According to a fifth aspect, this application provides a data processing apparatus, including a transceiver unit and a processing unit.

The transceiver unit is configured to receive a first message, where the first message is used to request a virtual image service. The processing unit is configured to generate first service data of the virtual image service based on the first message. The transceiver unit is further configured to provide the first service data.

In an optional manner, the first message includes at least one of the following information: a user identifier, a device identifier, user preference information, a virtual image type selected by a user, and a language selected by the user.

In an optional manner, the processing unit is further configured to configure a service list of a service list server, where the service list includes service information of the virtual image service.

In an optional manner, the service information includes at least one of the following information: service type indication information of the virtual image service, service instance information of the virtual image service, and linked-application information of the virtual image service.

In an optional manner, when the service information is the service instance information, the service instance information includes an uplink delivery parameter, and the uplink delivery parameter includes destination address information of uplink data.

In an optional manner, the uplink transmission parameter further includes a transport protocol supported by the uplink data and/or a media type supported by the uplink data.

In an optional manner, the service instance information further includes a service access parameter, and the service access parameter includes address information for accessing service data of the virtual image service.

In an optional manner, when the service information includes the service instance information, the service instance information includes a service access parameter, and the service access parameter includes address information for accessing service data of the virtual image service.

In an optional manner, when the service information includes the service instance information and the linked-application information of the virtual image service, the service instance information includes a service access parameter, and the service access parameter includes address information for accessing service data of the virtual image service.

In an optional manner, the service access parameter further includes a transport protocol supported by the service data and/or a media type supported by the service data.

In an optional manner, the transceiver unit is further configured to receive a second message, where the second message includes user expression information, the user expression information is used for real-time interaction with the virtual image service, and the second message includes the received user expression information; the processing unit is further configured to generate second service data of the virtual image service based on the second message; and the transceiver unit is further configured to provide the second service data.

In an optional manner, the user expression information includes at least one of the following information: audio information, video information, and text information.

In an optional manner, the service type indication information includes at least one of the following indication information: a digital human, a 2D digital human, a 3D digital human, a digital human of a cartoon image, a digital human of a real-person image, a custom digital human, and a digital human of sign language.

According to a sixth aspect, an embodiment of this application provides a communication system. The communication system includes the terminal in the first aspect and a network device.

According to a seventh aspect, this application provides a chip system. The chip system includes a processor, and may further include a memory, to implement the method in any one of the possible designs of the first aspect. The chip system may include a chip, or may include a chip and another discrete component.

According to an eighth aspect, this application further provides a computer-readable storage medium. The computer-readable storage medium stores computer-readable instructions. When the computer-readable instructions are run on a computer, the computer is enabled to perform the method in any one of the possible designs of the first aspect.

According to a ninth aspect, this application provides a computer program product including instructions. When the computer program product is run on a computer, the computer is enabled to perform the method in the embodiments of the first aspect.

For technical effects that can be achieved in the second aspect to the ninth aspect, refer to descriptions of technical effects that can be achieved in corresponding possible design solutions in the first aspect. Details are not described herein again in this application.

### BRIEF DESCRIPTION OF DRAWINGS

FIG. 1A is a diagram of a DVB system architecture;
FIG. 1B is a diagram of a system architecture to which this application is applicable;
FIG. 2A is a schematic flowchart of a data processing method according to this application;
FIG. 2B is a schematic flowchart of a data processing method according to this application;
FIG. 3A to FIG. 3D are a schematic flowchart of a data processing method according to this application;
FIG. 4A to FIG. 4D are a schematic flowchart of a data processing method according to this application;
FIG. 5A to FIG. 5C are a schematic flowchart of a data processing method according to this application;
FIG. 6A to FIG. 6C are a schematic flowchart of a data processing method according to this application;
FIG. 7A to FIG. 7C are a schematic flowchart of a data processing method according to this application;
FIG. 8 is a diagram of a structure of a data processing apparatus according to this application;
FIG. 9 is a diagram of a structure of another data processing apparatus according to an embodiment of this application; and
FIG. 10 is a diagram of a structure of still another data processing apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, "a plurality of" means two or more, unless otherwise specified. Therefore, mutual reference may be made between an apparatus implementation and a method implementation, and repeated descriptions are omitted.

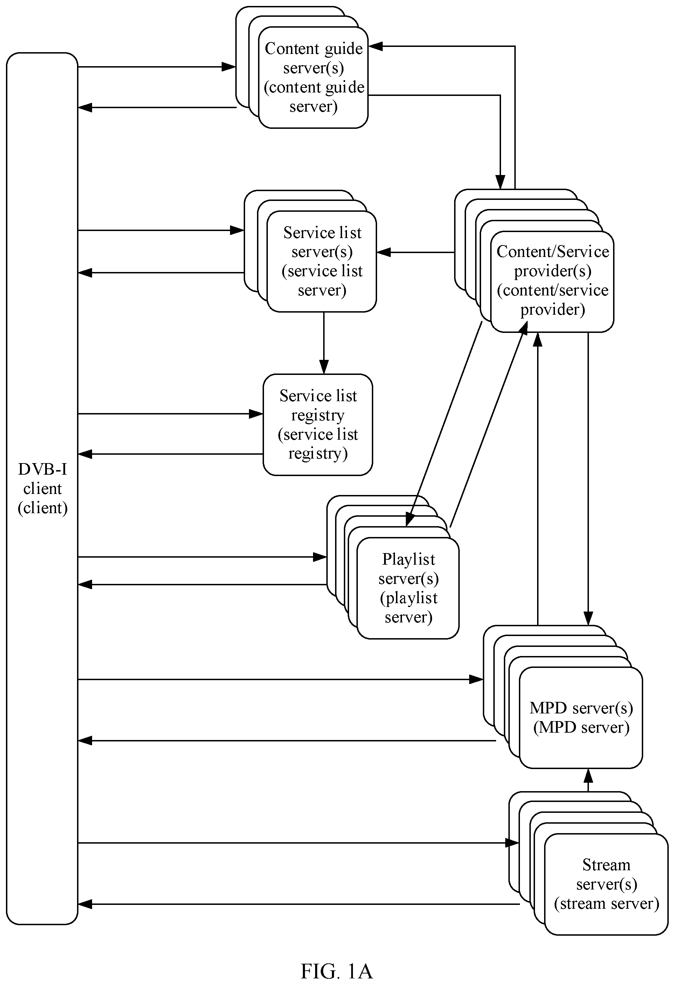

FIG. 1A shows a DVB system architecture. The architecture includes a DVB-I client, a service list server(s) (service list server), a content/service provider(s), an MPD server(s), a stream server(s), a content guide server(s), a service list registry, and a playlist server(s).

The DVB-I client is a client function network element that supports DVB-I service discovery. The DVB-I client may be integrated in various terminal devices, such as a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a smart television, and a set-top box. The service list server(s) is a server that provides a service list for the DVB-I client. The content/service provider(s) is an organization that provides a DVB-I service. The MPD server(s) is a server that provides a DASH MPD file. The stream server(s) is a server that provides a DASH media segment for the DVB-I client. The content guide server(s) is a server that provides content guide data for the DVB-I client. The service list registry is a server that provides a service list server address for the DVB-I client. The playlist server(s) is a server that provides a playlist of content items for the DVB-I client.

The content/service provider(s) sends an available service list to the service list server. The service list server registers a service list access entry address (URL) to the service list registry. When the DVB-I client needs to discover a service, the DVB-I client obtains the service list access entry address from the service list registry based on an address of the service list registry. Then the DVB-I queries the service list based on the access entry address. The service list includes information about one or more services. Each service may include one or more service instances that provide services. If a service implements a service capability through a linked application, service information includes linked-application information (Linked Application).

In this application, service data is also referred to as media data or a media file, and includes audio, a video, text, and the like.

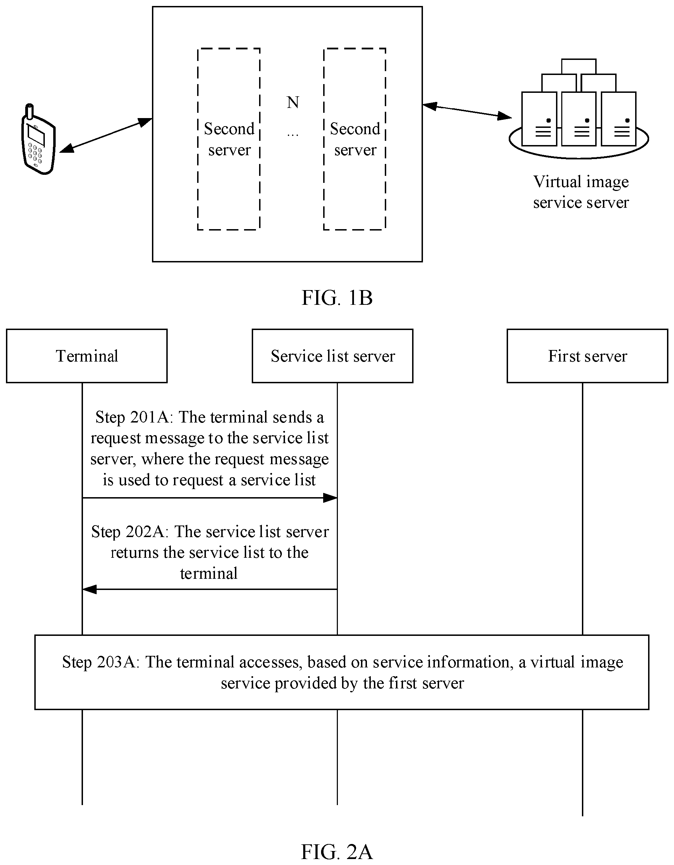

FIG. 1B is a diagram of a system architecture to which this application is applicable. The architecture includes a terminal, a virtual image service server (namely, a first server), and a second server. The second server is configured to construct a transmission bridge between the terminal and the virtual image service server, and may transmit a user identifier, user expression information, and the like. This is not specifically limited herein. During actual application, there may be N second servers, where N is a positive integer. For example, the second servers are an uplink server, a downlink server, and an application server. The uplink server is configured to forward, to the virtual image service server, uplink data (the user identifier, the user expression information, and the like) sent by the terminal. The downlink server is configured to receive a virtual image (namely, service data) generated by the virtual image service server, and forward the virtual image to the terminal. The application server is configured to forward, to the virtual image service server, the uplink data (the user identifier, the user expression information, and the like) sent by the terminal. A type and a function of the second server are not specifically limited herein, and may be configured based on a specific application case during actual application. A virtual image service may be understood as a digital human service, a virtual space service, a virtual animal service, or the like. The virtual image service is not specifically limited herein. In addition, the virtual image service server is configured to provide the virtual image service, and may be integrated with the second server, or may be separated from the second server. This is not specifically limited in this application.

An existing DVB standard does not support a digital human service, and DVB-I does not support discovery of a digital human service. However, currently, a digital service has become a future development trend. In view of this, this application provides a data processing method, to discover a digital human service through DVB-I. As shown in FIG. 2A, the method may be performed through interaction between a terminal (namely, a DVB-client), a service list server (service list server(s)), and a first server (namely, a content/service provider(s), or an operator or the like, which is not specifically limited herein). Certainly, during actual application, another device may alternatively be used. This is not specifically limited herein. The method is performed as follows:

First, the terminal needs to obtain a service list. The terminal may obtain the service list from the service list server, or may obtain the service list from another terminal. For example, a terminal A has obtained and stored the service list, and a terminal B may request the service list from the terminal A. Certainly, during actual application, the terminal may alternatively obtain the service list in another manner. This is not specifically limited herein in this application. In FIG. 2A, an example in which the terminal obtains the service list from the service list server is used for description.

Step 201A: The terminal sends a request message to the service list server, where the request message is used to request the service list (that is, a list including service information).

Specifically, when the DVB-I client resides on the terminal, the terminal may obtain a service information access entry address from a service list registry based on an address of the service list registry, and then query service information based on the access entry address. In addition, the terminal may alternatively obtain the service information access entry address through configuration.

The service list in step 201A includes service information of a virtual image service. The service information may indicate a service type (for example, obtaining a digital human service), an access mode (an access address or a protocol), a service provider, and the like of the virtual image service. This is not specifically limited herein. The service information may be configured by the content/service provider based on a service attribute of the virtual image service provided by the content/service provider. The content/service provider may configure the service information manually offline or through interaction with the service list server. This is not specifically limited herein.

Optionally, the service information includes at least one of the following information: service type indication information of the virtual image service, service instance information of the virtual image service, and linked-application information of the virtual image service. During specific implementation, a new field may be added to the service list for indication, or a field may be reused for indication. This is not specifically limited in this application.

The service type indication information includes at least one of the following indication information: a digital human, a 2D digital human, a 3D digital human, a digital human of a cartoon image, a digital human of a real-person image, a custom digital human, and a digital human of sign language. The instance information of the virtual image service indicates access address information of the virtual image service, for example, an uplink data transmission address, a downlink data (namely, service data) download address, or a bidirectional transmission address. In terms of the linked-application information of the virtual image service, if the virtual image service is a digital human service, the linked-application information of the virtual image service may be a digital human application. The digital human application may be installed on the terminal, and the terminal may access the digital human service or the like based on an application server of the digital human application. In this application, the service type indication information of the virtual image service, the service instance information of the virtual image service, and the linked-application information of the virtual image service are configured in the service information, to ensure that a DVB system supports the virtual image service, so that the terminal can access the virtual image service and receive a service of the virtual image service.

Step 202A: The service list server returns the service list to the terminal.

Step 203A: The terminal accesses, based on the service information, the virtual image service provided by the first server.

The following describes how the terminal specifically accesses the virtual image service when the service information includes different information.

Case 1: The service information includes the virtual image service instance information. The service instance information includes an uplink delivery parameter. The uplink delivery parameter includes destination address information of uplink data.

The terminal may determine the destination address information of the uplink data based on the uplink delivery parameter. Herein, an example in which the destination address information of the uplink data is an uplink server is used for description. The terminal sends a first message to the uplink server. The first message is used to request the virtual image service. The first message may include the following information: a user identifier, a device identifier, user preference information, a virtual image type selected by a user, a language selected by the user, and the like. The user identifier may be understood as a user identifier of the DVB-I client, and the identifier may identify identity information, network access information, or the like of the DVB-I client. This is merely an example for description. The device identifier is an identifier or an IP address of a device on which the DVB-I client resides. The user preference information is usually information collected based on a historical operation habit of the user or a parameter that is set by the user. For example, if the user likes to watch a live sports program when watching live broadcast, a digital human server may recommend a digital human wearing a sports suit. The virtual image type selected by the user may be a digital human of a cartoon image or the like. The language selected by the user may be Chinese, English, Korean, or the like, or may be sign language. These are merely examples for description, and the request message is not specifically limited.

The uplink server sends the first message to the digital human server, and returns a downlink data download address to the terminal. Because the service instance information does not include the downlink data download address, the downlink data download address is dynamically generated by the uplink server. The uplink server may return a response message to the terminal, where the response message may include the downlink data download address. The digital human server may feed back a generated digital human video to the downlink data download address. The terminal may request service data, for example, the digital human video, from the download address, to access the digital human service.

During actual application, the uplink transmission parameter may further include a transport protocol supported by the uplink data and a media type supported by the uplink data. The transport protocol supported by the uplink data is configured in the uplink transmission parameter, so that a protocol to be used to transmit virtual image service request data can be known. A media type, for example, audio, a video, or text, supported by the virtual image service request data is configured in the uplink transmission parameter, so that a media type of data to be used to transmit the virtual image service request data can be known.

In addition, it should be further noted that the uplink server may be integrated with the digital human server, or may be separated from the digital human server. This is not specifically limited in this application.

Case 2: The service information includes the virtual image service instance information. The service instance information includes an uplink delivery parameter and a service access parameter. The uplink delivery parameter includes destination address information of uplink data. The service access parameter includes address information for accessing service data of the virtual image service.

The terminal may determine the destination address information of the uplink data based on the uplink delivery parameter. Herein, an example in which the destination address information of the uplink data is an uplink server is used for description. The terminal sends a first message to the uplink server. The first message is used to request the virtual image service. The first message may include the following information: a user identifier, a device identifier, user preference information, a virtual image type selected by a user, a language selected by the user, and the like. For understanding, refer to the case 1. Details are not described herein again.

The uplink server sends the first message to a digital human server, and returns a downlink data download address to the terminal. Because the service instance information includes the address information for accessing the service data of the virtual image service (that is, the downlink data download address), the digital human server may feed back a generated digital human media file to an address for accessing the service data of the virtual image service. The terminal may request the service data, for example, the digital human media file, from the address for accessing the service data of the virtual image service, to access the digital human service.

During actual application, the uplink transmission parameter may further include a transport protocol supported by the uplink data and a media type supported by the uplink data. The transport protocol supported by the uplink data is configured in the uplink transmission parameter, so that a protocol to be used to transmit virtual image service request data can be known. A media type, for example, audio, a video, or text, supported by the virtual image service request data is configured in the uplink transmission parameter, so that a media type of data to be used to transmit the virtual image service request data can be known. The service access parameter further includes a transport protocol supported by the service data and/or a media type supported by the service data. In this application, the transport protocol supported by the service data is configured in the service access parameter, so that a protocol to be used to transmit virtual image service request data can be known; and the media type, for example, audio, a video, or text, supported by the service data is configured in the service access parameter, so that a media type of data to be used to transmit the virtual image service can be known.

In addition, it should be further noted that the uplink server and the address for accessing the service data of the virtual image service may be integrated with the digital human server, or may be separated from the digital human server. This is not specifically limited in this application.

Case 3: The service information includes the virtual image service instance information. The service instance information includes a service access parameter. The service access parameter includes address information for accessing service data of the virtual image service.

The terminal may determine destination address information of uplink data and downlink data based on the service access parameter (the service access parameter is understood as an access parameter of bidirectional communication, to be specific, a parameter that supports both transmission of virtual image request data and downloading of virtual image service data). The terminal sends a first message to an address for accessing the service data of the virtual image service. The first message is used to request the virtual image service. The first message may include the following information: a user identifier, a device identifier, user preference information, a virtual image type selected by a user, a language selected by the user, and the like. For understanding, refer to the case 1. Details are not described herein again.

The first message is sent from the address for accessing the service data of the virtual image service to a digital human server. The digital human server may feed back a generated digital human media file to the address for accessing the service data of the virtual image service. The terminal may request the service data, for example, a digital human video, from the address for accessing the service data of the virtual image service, to access the digital human service.

During actual application, the service access parameter further includes a transport protocol supported by the service data and/or a media type supported by the service data. In this application, the transport protocol supported by the service data is configured in the service access parameter, so that a protocol to be used to transmit virtual image service request data can be known; and the media type, for example, audio, a video, or text, supported by the service data is configured in the service access parameter, so that a media type of data to be used to transmit the virtual image service can be known.

In addition, it should be further noted that the address for accessing the service data of the virtual image service may be integrated with the digital human server, or may be separated from the digital human server. This is not specifically limited in this application.

Case 4: When the service information includes the service instance information and the linked-application information of the virtual image service, the service instance information includes a service access parameter, and the service access parameter includes address information for accessing service data of the virtual image service.

The terminal may activate a linked application, installed on the terminal, of the virtual image service, that is, the digital human application, and then send a first message to an application server. The first message is used to request the virtual image service. The first message may include the following information: a user identifier, a device identifier, user preference information, a virtual image type selected by a user, a language selected by the user, and the like. For understanding, refer to the case 1. Details are not described herein again.

The application server sends the first message to a digital human server, and returns, to the terminal, an address for accessing the service data of the virtual image service. The digital human server may feed back a generated digital human media file to the address for accessing the service data of the virtual image service. The terminal may request the service data, for example, a digital human video, from the address for accessing the service data of the virtual image service, to access the digital human service.

During actual application, the service access parameter further includes a transport protocol supported by the service data and/or a media type supported by the service data. In this application, the transport protocol supported by the service data is configured in the service access parameter, so that a protocol to be used to transmit virtual image service request data can be known; and the media type, for example, audio, a video, or text, supported by the service data is configured in the service access parameter, so that a media type of data to be used to transmit the virtual image service can be known.

In addition, it should be further noted that the application server and the address for accessing the service data of the virtual image service may be integrated with the digital human server, or may be separated from the digital human server. This is not specifically limited in this application.

Case 5: The service information includes the linked-application information of the virtual image service.

The terminal may activate a linked application, installed on the terminal, of the virtual image service, that is, the digital human application, and then send a first message to an application server. The first message is used to request the virtual image service. The first message may include the following information: a user identifier, a device identifier, user preference information, a virtual image type selected by a user, a language selected by the user, and the like. For understanding, refer to the case 1. Details are not described herein again.

The application server sends the first message to a digital human server. The digital human server may feed back a generated digital human media file to the application server. The terminal may request service data, for example, a digital human video, from the application server, to access the digital human service.

In addition, it should be further noted that the application server may be integrated with the digital human server, or may be separated from the digital human server. This is not specifically limited in this application.

In the case 1, the case 2, and the case 4, a response message for the first message may be the address for accessing the service data of the virtual image service, or may include other information. This is not specifically limited herein. In the case 3 and the case 5, there may be no response message for the first message.

The digital human server may send, to the terminal as first service data, the digital human media file generated based on the first message, so that the terminal plays a service based on the first service data.

In addition, it should be further noted that, in the case 1 to the case 5, although the virtual image service is obtained, during actual application, the user may further interact with the virtual image service in real time, for example, the user expects a digital human to provide travel interpretation for a specific region. In view of this, the terminal may further send a second message to implement real-time interaction with the virtual image service. The second message includes user expression information collected by the terminal. The user expression information includes at least one of the following information: audio information, video information, and text information. In the case 1 and the case 2, the second message may be sent by the terminal to the uplink server. In the case 3, the second message may be sent by the terminal to the address for accessing the service data of the virtual image service. In the case 4 and the case 5, the second message may be sent by the terminal to the application server. Details are not described herein in this application. A response message for the second message and the response message for the first message may be understood equivalently. Details are not described herein again. The digital human server may send, to the terminal as second service data, a digital human media file generated based on the second message, so that the terminal plays a service based on the second service data.

In addition, the terminal may send a third message to the address information for accessing the service data of the virtual image service; and receive a response message for the third message, where the response message includes the first service data or the second service data. The terminal may further send a fourth message to the address information for accessing the service data of the virtual image service; and receive a response message for the fourth message, where the response message for the fourth message includes a media presentation description file, for example, an MPD file, of the virtual image service. The terminal requests the first service data or the second service data based on the media presentation description file.

In addition, it should be further noted that, during actual application, the digital human server may not receive any message from the terminal, and the digital human server may directly generate a digital human and push the digital human to the terminal. During actual application, this is not specifically limited herein in this application.

In this application, the terminal may obtain the service information of the virtual image service from the service list server of the DVB system, and request, based on the service information, the virtual image service from a device associated with the virtual image service person, to access the virtual image service. In this manner, the terminal may obtain the virtual image service.

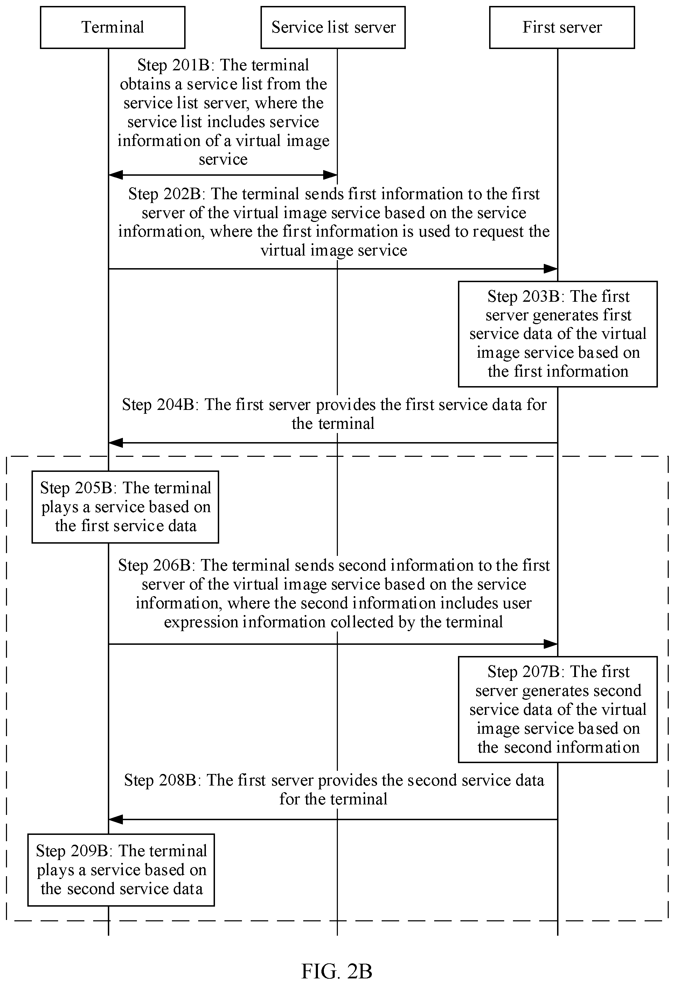

As shown in FIG. 2B, the method may be performed through interaction between a terminal (namely, a DVB-client), a service list server (service list server(s)), and a first server (namely, a content/service provider(s), or an operator or the like, which is not specifically limited herein). Certainly, during actual application, another device may alternatively be used. This is not specifically limited herein. The method is performed as follows:
Step 201B: The terminal obtains a service list from the service list server, where the service list includes service information of a virtual image service.

For understanding, refer to step 201A. Details are not described herein.

Step 202B: The terminal sends first information to the first server of the virtual image service based on the service information, where the first information is used to request the virtual image service.

It should be noted that content of the first information is the same as content included in the first message in FIG. 2A. Because the terminal may not directly interact with the first server, a second server may need to serve as an intermediary. Therefore, the terminal may send the first message to the second server, and the second server processes the first message and then sends a message to the first server. The two messages are different, but the two messages carry same information: a user identifier, a device identifier, user preference information, a virtual image type selected by a user, a language selected by the user, and the like.

Step 203B: The first server generates first service data of the virtual image service based on the first information.

Step 204B: The first server provides the first service data for the terminal.

In an optional manner, the first server may store the first service data, where a first address at which the first service data is stored corresponds to address information (for example, a second server for transmitting service data, or a specific position on the first service, which is not specifically limited herein), obtained by the terminal, for accessing service data of the virtual image service. The terminal sends a third message based on the address information for accessing the service data of the virtual image service. The terminal receives a response message for the third message, where the response message includes the first service data.

In an optional manner, the first server may store a media presentation file generated when the first service data is segmented, where a second address of the media presentation file corresponds to address information, obtained by the terminal, for accessing service data of the virtual image service; and the first server further stores a segment of the first service data, where a third address at which the segment of the first service data is stored corresponds to an address described in the media presentation file. The terminal sends a fourth message based on the address information for accessing the service data of the virtual image service. The terminal receives a response message for the fourth message, where the response message includes the media presentation description file. The terminal requests the first service data based on the media presentation description file.

In an optional manner, the first server may store the first service data, where a fourth address at which the first service data is stored corresponds to address information, obtained by the terminal, for accessing service data of the virtual image service; determine the terminal based on the address information for accessing the service data of the virtual image service; and send the first service data to the terminal based on the address information for accessing the service data of the virtual image service.

Step 205B: The terminal plays a service based on the first service data.

Step 202B to step 205B may be understood as a processing process of a virtual image service request stage. After obtaining the virtual image service, the user may interact with a virtual image in real time, for example, interact with a digital human through text, a video, or audio. This may be performed through the following steps.

Step 206B: The terminal sends second information to the first server of the virtual image service based on the service information, where the second information includes user expression information collected by the terminal.

It should be noted that content of the second information is the same as content included in the second message in FIG. 2A. Because the terminal may not directly interact with the first server, a second server may need to serve as an intermediary. Therefore, the terminal may send the second message to the second server, and the second server processes the second message and then sends a message to the first server. The two messages are different, but the two messages carry same information: a user identifier, a device identifier, user preference information, a virtual image type selected by a user, a language selected by the user, and the like.

Step 207B: The first server generates second service data of the virtual image service based on the second information.

Step 208B: The first server provides the second service data for the terminal.

In an optional manner, the first server may store the second service data, where a first address at which the second service data is stored corresponds to address information (for example, a second server for transmitting service data, or a specific position on the first service, which is not specifically limited herein), obtained by the terminal, for accessing service data of the virtual image service. The terminal sends a third message based on the address information for accessing the service data of the virtual image service. The terminal receives a response message for the third message, where the response message includes the second service data.

In an optional manner, the first server may store a media presentation file generated when the second service data is segmented, where a second address of the media presentation file corresponds to address information, obtained by the terminal, for accessing service data of the virtual image service; and the first server further stores a segment of the second service data, where a third address at which the segment of the second service data is stored corresponds to an address described in the media presentation file. The terminal sends a fourth message based on the address information for accessing the service data of the virtual image service. The terminal receives a response message for the fourth message, where the response message includes the media presentation description file. The terminal requests the second service data based on the media presentation description file.

In an optional manner, the first server may store the second service data, where a fourth address at which the second service data is stored corresponds to address information, obtained by the terminal, for accessing service data of the virtual image service; determine the terminal based on the address information for accessing the service data of the virtual image service; and send the first service data to the terminal based on the address information for accessing the service data of the virtual image service.

Step 209B: The terminal plays a service based on the second service data.

To better describe the solutions of this application, the following four specific examples are used for description. The solutions are performed as follows:

**Embodiment 1:** A DVB-I client obtains service type indication information of a virtual image service and service instance information of the virtual image service based on a service list, and exchanges user selection information and user expression information with an uplink server based on the service instance information of the virtual image service. Then the uplink server transmits the user selection information and the user expression information to a virtual image service server. The virtual image service server generates media data associated with the virtual image service, and returns the media data to the DVB-I client.

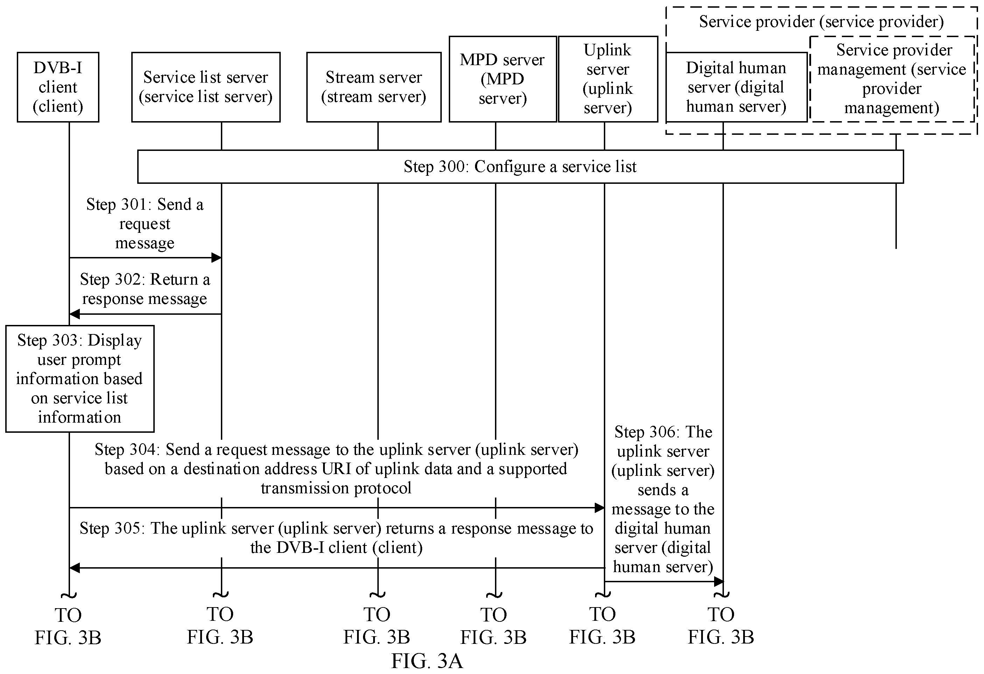

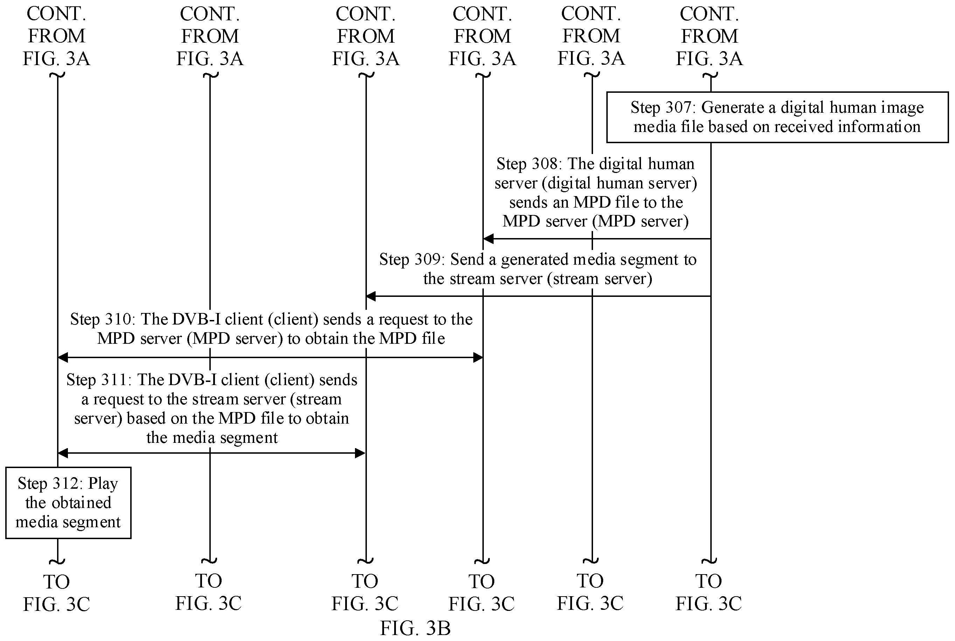

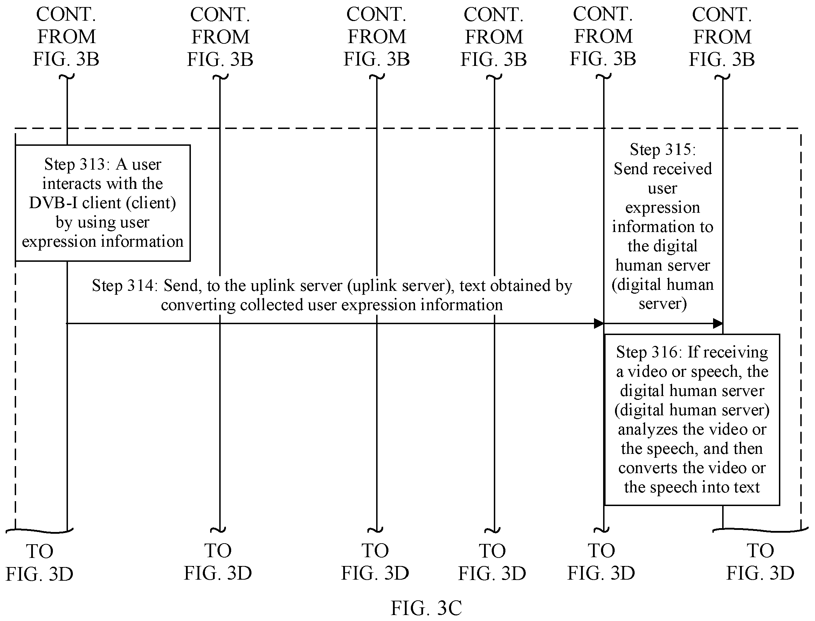

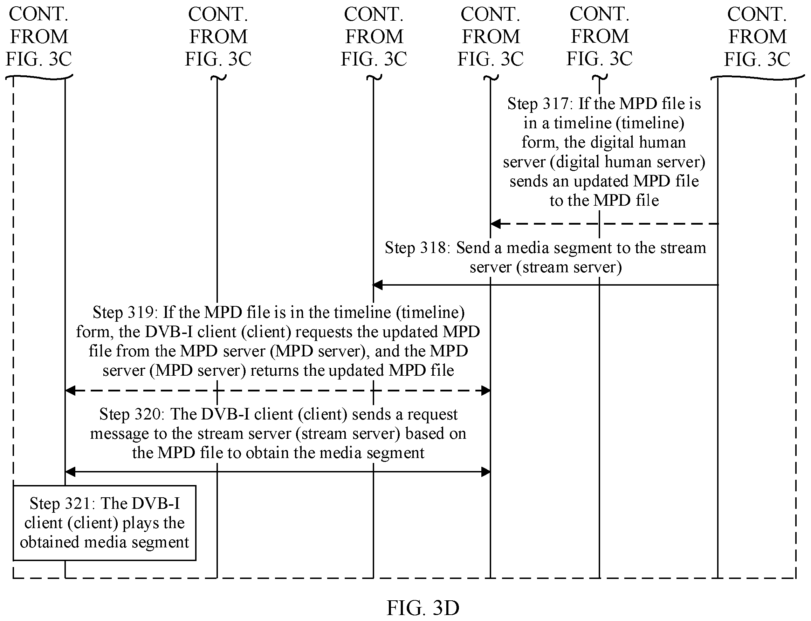

Specifically, refer to FIG. 3A to FIG. 3D for understanding. Data exchange between a DVB-I client, a service list server, a stream server, an MPD server, a playlist server, an uplink server, and a digital human server is used as an example for description. When media data is sent by using an adaptive bit rate, the stream server is configured to store media segment information, for example, a video segment or an audio segment, of a virtual image service. If the media segment information is a video segment, the media segment information may be understood as a plurality of segments into which a video is divided based on time, or may be understood as a plurality of segments into which a video is divided based on image frames. If the media segment information is an audio segment, the media segment information may be understood as a plurality of segments into which an audio clip is divided based on audio frames. The MPD server stores MPD file information corresponding to a media segment, and an address of the media segment is described in an MPD file. An address template of the MPD server may be indicated in the following manner: https://cdn.example.com/digitalhuman_**$userid**/dash/manifes.mpd, or https://cdn.example.com/digitalhuman_**$ipaddress**/dash/manifes.mpd. In the address template of the MPD server, **$userid** and **$ipaddress** may be replaced with a user identifier and an IP address of the DVB-I client. This is merely an example for description in this application, and a form of the address template of the MPD server is not specifically limited. When downloading is performed in a progressive manner, the playlist server is configured to store media data of the virtual image service. The uplink server is a destination address of uplink data. When media data is sent in another streaming media form, the stream server sends the media data when receiving uplink data. The digital human server is an address of a virtual image service provider, and the digital human server is a service provider. During specific implementation, the foregoing servers may be integrated or separately disposed. In FIG. 3A to FIG. 3D, an example in which the virtual image service is a digital human is used for description.

Step 300: Configure a service list.

In an optional embodiment, the service provider configures the service list manually offline, for example, through the digital human server. In another optional embodiment, a service provider management function interacts with the service list server to configure the service list. How to configure the service list is not specifically limited in this application.

The following Table 1 shows a service list applicable to Embodiment 1. A service type indicates that the virtual image service is a digital human, and may further indicate that the virtual image service is a 2D digital human, a 3D digital human, a digital human of a cartoon image, a digital human of a real-person image, a custom digital human, or a digital human of sign language. A service genre indicates a service type of the digital human, for example, sightseeing or food. A service instance (namely, service instance information) includes a supported digital human type, an uplink transmission parameter, and a service access parameter (namely, a service data download address). A digital human type parameter indicates indication information of a digital human service type supported by the service instance, and may be finer-grained information of the service type, for example, a 2D digital human, a 3D digital human, a digital human of a cartoon image, a digital human of a real-person image, a custom digital human, or a digital human of sign language. An uplink delivery parameter includes at least one of the following information: a destination address URI of uplink data, a transport protocol (for example, HTTP, SRT, RTMP, or WebSocket) supported by the uplink data, and a media type, for example, a video, speech, or text, supported by the uplink data. (Information that is not provided may be defined in a standard or determined based on a configuration). A service access parameter includes access address information of service data of the digital human (an address of an MPD file on the MDP server (in the case of transmission at an adaptive bit rate) or an address of a media file on the playlist server (in the case of progressive transmission)), a transport protocol supported by the service data, and service data download delay information (for example, the service data is downloaded 100 milliseconds after the uplink data is sent).

**Table 1**

| Service list | | |
|---|---|---|
| Service type (service type) | Digital human (digital human) | |
| Service genre (service genre) | Sightseeing, food, ... | |
| Service instance (service instance information) | Digital human type | 2D digital human, 3D digital human, digital human of a cartoon image, digital human of a real-person image, custom digital human, or digital human of sign language |
| | Uplink delivery parameter | Destination address URI of the uplink data |
| | | Transport protocol supported by the uplink data |
| | | Media type supported by the uplink data |
| | Service access parameter | Access address information of the service data of the digital human |
| | | Transport protocol supported by the service data |
| | | Service data download delay information |
| | Content attribute (content attribute) | Language |

Step 301: The DVB-I client sends a request message to the service list server, where the request message is used to request to obtain the service list.

Optionally, the request message carries a requested service type, for example, the digital human. If the request message carries the requested service type, the service list server may search for corresponding service list information based on information about the service type, and does not need to feed back all service lists to the DVB-I client. In this manner, data processing efficiency can be improved.

Step 302: The service list server returns a response message to the DVB-I client.

If the request message in step 301 does not include a service type, the response message includes service list information configured in step 300. If the request message in step 301 includes a service type, the response message includes service list information corresponding to the service type in step 301.

Step 303: The DVB-I client displays user prompt information based on the service list information.

Specifically, the user prompt information may prompt a user to select a specific virtual image service, for example, "Select a virtual image service type"; or may prompt a user to select a specific service type of a virtual image service, for example, "Welcome to the digital human service. Select a service type of the digital human, for example, a 2D digital human, a 3D digital human, a digital human of a cartoon image, a digital human of a real-person image, a custom digital human, or a digital human of sign language." These are merely examples for description, and do not constitute a specific limitation.

Step 304: The DVB-I client sends a request message to the uplink server based on the destination address URI of the uplink data and the supported transport protocol.

Optionally, the request message includes one or more of the following information: a user identifier, a device identifier, user preference information, a virtual image type selected by a user, and a language selected by the user. The user identifier may be understood as a user identifier of the DVB-I client, and the identifier may identify identity information, network access information, or the like of the DVB-I client. This is merely an example for description. The device identifier is an identifier or an IP address of a device on which the DVB-I client resides. The user preference information is usually information collected based on a historical operation habit of the user or a parameter that is set by the user. For example, if the user likes to watch a live sports program when watching live broadcast, the digital human server may recommend a digital human wearing a sports suit. The virtual image type selected by the user may be the digital human of the cartoon image or the like. The language selected by the user may be Chinese, English, Korean, or the like, or may be sign language. These are merely examples for description, and the request message is not specifically limited. If the user selects the sign language, a media type is usually a video or text.

Step 305: The uplink server returns a response message to the DVB-I client. Optionally, the response message includes download address information of the service data of the digital human.

If the service list information does not include the download address information URI of the service data of the digital human or the address template of the MPD server, the uplink server may dynamically generate a URI, and feed back the dynamically generated URI to the DVB-I client as a download address of the service data of the digital human.

Step 306: The uplink server sends a message to the digital human server.

The message includes information received from the DVB-I client, to be specific, content of the request message in step 304. If the URI is dynamically generated in step 305, the message further includes the URI.

Step 307: The digital human server generates a digital human image media file based on received information.

Specifically, the digital human server may determine, based on subscription information of the user, whether to authorize generation of a custom digital human image. For example, if a user A has subscribed to use permission on the digital human service from an operator or a user A has subscribed to use permission on the digital human service from a digital human service provider, the digital human server may determine, based on subscription information of the user A, to authorize generation of a custom digital human image. In addition, the digital human server may generate, based on preference information of the user, a digital human image that meets a preference of the user. For example, if the user likes animations, the digital human server may generate a digital human of a cartoon image.

Step 308: If the service data is downloaded by using an adaptive bit rate, the digital human server segments the media file and generates an MPD file, and the digital human server sends the MPD file to the MPD server.

An address of the MPD on the MPD server is the URI carried in the message sent in step 306.

Step 309: The digital human server sends a generated media file segment to the stream server, where a storage address is an address described in the MPD file.

Step 310: The DVB-I client sends a request to the MPD server to obtain the MPD file. Optionally, the DVB-I client may determine, based on the service data download delay information, time at which the request is to be sent.

Step 311: The DVB-I client sends a request to the stream server based on the MPD file to obtain the media file segment.

Step 312: The DVB-I client plays the obtained media segment.

In addition, it should be further noted that, if the service data is downloaded in a progressive manner, the digital human server may directly generate a media file, and send the generated media file to the playlist server, where a storage address is a dynamically generated URI or a previously delivered address template. The DVB-I client sends a request message to the playlist server to obtain the service data.

The following steps are repeatedly performed until the user ends the digital human service.

Step 313: The DVB-I client collects user expression information.

The user expression information includes at least one of the following information: audio information, video information, and text information. The device on which the DVB-I client resides may collect the user expression information through a camera or a microphone. Optionally, the DVB-I client may locally analyze a user input, and convert audio information or video information of the user into text information as the user expression information.

Step 314: The DVB-I client sends the collected user expression information to the uplink server.

Certainly, the DVB-I client may alternatively determine, based on a current network status, whether to convert the user expression information into text.

Step 315: The uplink server sends the received user expression information to the digital human server.

Step 316: If receiving a video or speech, the digital human server analyzes the video or the speech, and then converts the video or the speech into text.

After performing semantic analysis, the digital human server generates reply text (this needs to be supported by a large language model). The reply text drives a digital human model to generate a media file. If media data is sent by using an adaptive bit rate, the digital human server segments the media file.

Step 317: If the MPD file is in a timeline form, the digital human server sends an updated MPD file to the MPD file.

If the MPD file is in a template form, step 317 does not need to be performed.

Step 318: The digital human server sends a media segment to the stream server.

Step 319: If the MPD file is in the timeline form, the DVB-I client requests the updated MPD file from the MPD server, and the MPD server returns the updated MPD file.

If the MPD file is in the template form, step 319 does not need to be performed.

Step 320: The DVB-I client sends a request message to the stream server based on the MPD file to obtain the media segment.

Step 321: The DVB-I client plays the obtained media segment.

In addition, it should be further noted that, if the service data is downloaded in a progressive manner, the digital human server may directly generate a digital human media file, and send the media file to the playlist server, where a storage address is a dynamically generated URI or a previously delivered address template. The DVB-I client sends a request message to the playlist server to obtain the service data.

**Embodiment 2:** A DVB-I client obtains service type indication information of a virtual image service, service instance information of the virtual image service, and linked-application information of the virtual image service based on a service list. The DVB-I activates a linked application of the virtual image service. The application exchanges user selection information and user expression information with an application server. Then the application server transmits the user selection information and the user expression information to a virtual image service server. The virtual image service server generates media data associated with the virtual image service, and provides the media data for the DVB-I client.

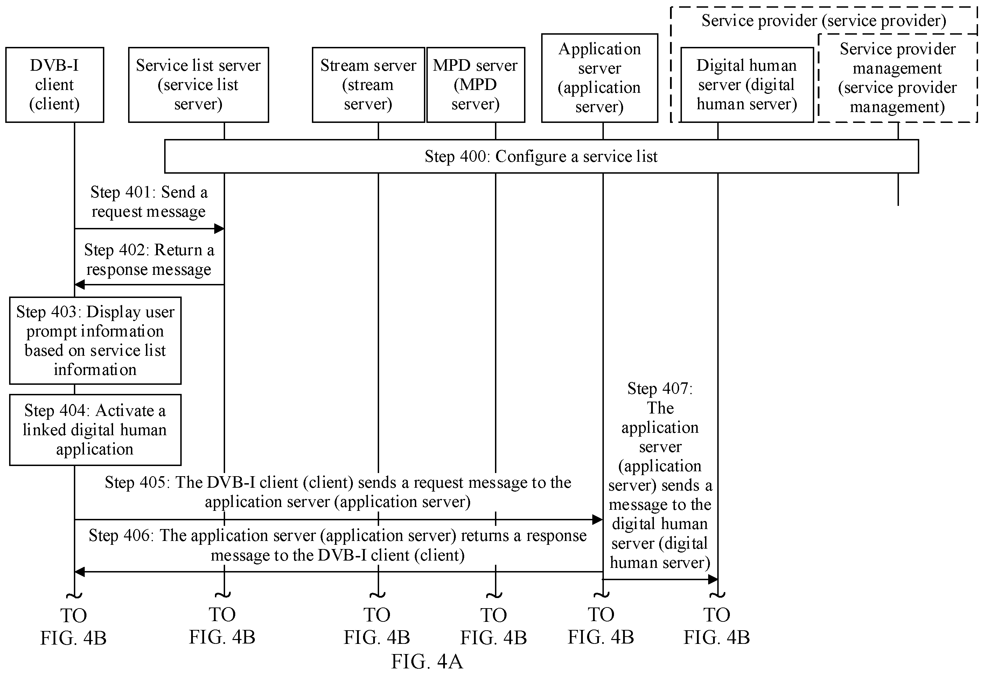

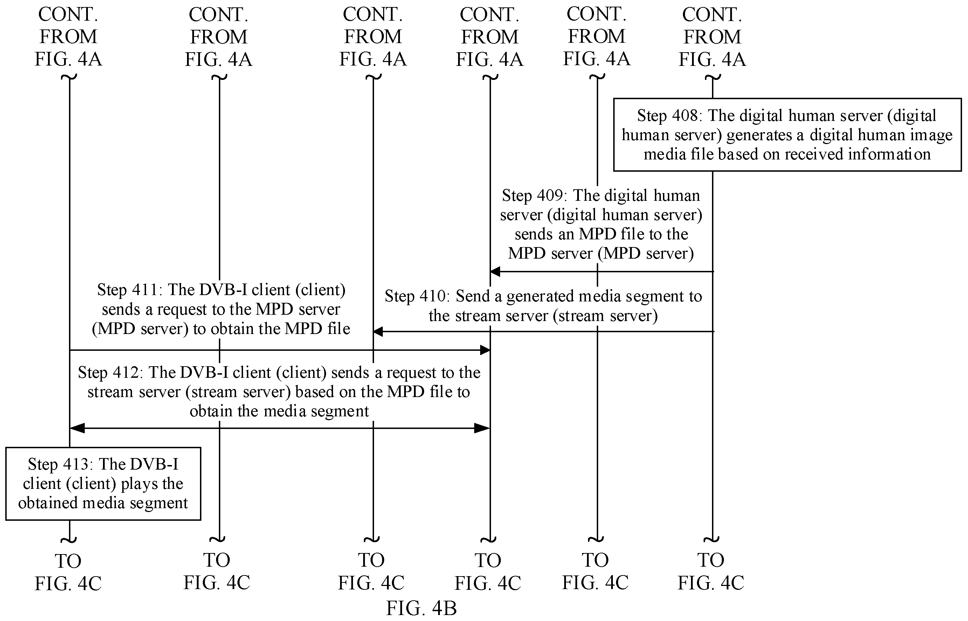

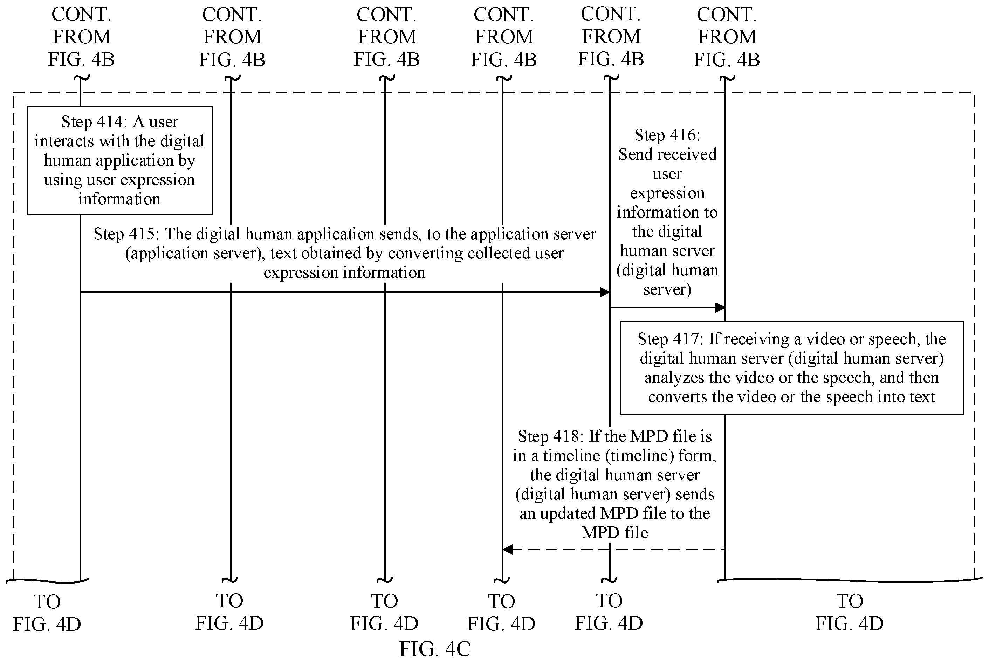

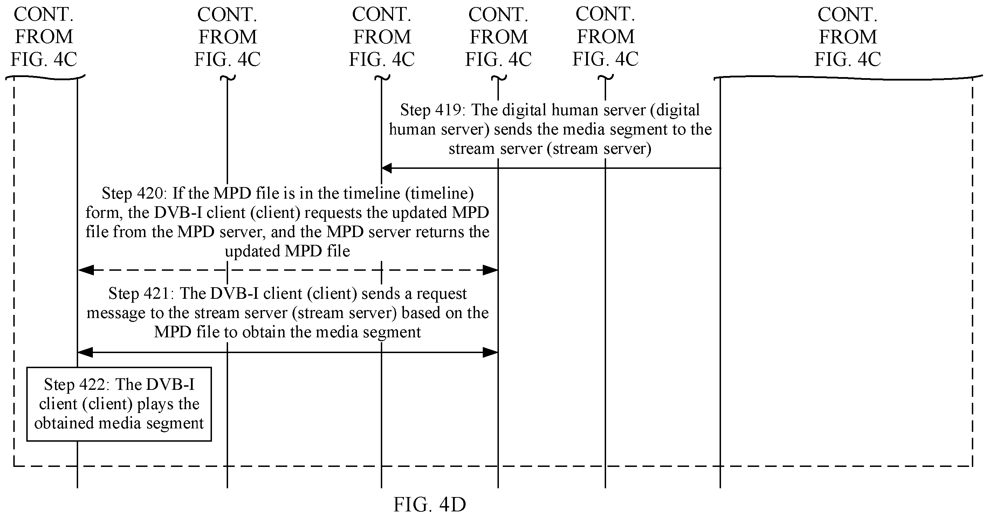

Specifically, refer to FIG. 4A to FIG. 4D for understanding. Data exchange between a DVB-I client, a service list server, a stream server, a playlist server, an MPD server, an application server, and a digital human server is used as an example for description. When media data is sent by using an adaptive bit rate, the stream server is configured to store media segment information, for example, a video segment or an audio segment, of a virtual image service. If the media segment information is a video segment, the media segment information may be understood as a plurality of segments into which a video is divided based on time, or may be understood as a plurality of segments into which a video is divided based on image frames. If the media segment information is an audio segment, the media segment information may be understood as a plurality of segments into which an audio clip is divided based on audio frames. The MPD server stores MPD file information corresponding to a media segment, and an address of the media segment is described in an MPD file. An address template of the MPD server may be indicated in the following manner: https://cdn.example.com/digitalhuman_$userid/dash/manifes.mpd, or https://cdn.example.com/digitalhuman_$ipaddress/dash/manifes.mpd. In the address template of the MPD server, $userid and $ipaddress may be replaced with a user identifier and an IP address of the DVB-I client. This is merely an example for description in this application, and a form of the address template of the MPD server is not specifically limited. When downloading is performed in a progressive manner, the playlist server is configured to store media data of the virtual image service. In addition, an address template of the media data is https://cdn.example.com/digitalhuman_$userid/dash/ or https://cdn.example.com/digitalhuman_$ipaddress/dash. An uplink server is a destination address of uplink data. When media data is sent in another streaming media form, the UL/DL stream server sends the media data when receiving uplink data. The digital human server is an address of a virtual image service provider, and the digital human server is a service provider. During specific implementation, the uplink server and the digital human server may be integrated or separately disposed. The application server is a destination address of uplink data. In FIG. 4A to FIG. 4D, an example in which the virtual image service is a digital human is used for description.

Step 400: Configure a service list.

In an optional embodiment, the service provider configures the service list manually offline, for example, through the digital human server. In another optional embodiment, a service provider management function interacts with the service list server to configure the service list. How to configure the service list is not specifically limited in this application.

The following Table 2 shows a service list applicable to Embodiment 2. A service type indicates that the virtual image service is a digital human, and may further indicate that the virtual image service is a 2D digital human, a 3D digital human, a digital human of a cartoon image, a digital human of a real-person image, a custom digital human, or a digital human of sign language. A service genre indicates a service type of the digital human, for example, sightseeing or food. A service instance (namely, service instance information) includes a supported digital human type and a service access parameter. A digital human type parameter indicates indication information of a digital human service type supported by the service instance, for example, a 2D digital human, a 3D digital human, a digital human of a cartoon image, a digital human of a real-person image, a custom digital human, or a digital human of sign language. A linked application indicates linked-application information of the virtual image service, for example, an application that supports the digital human, where the application supports only uplink data transmission. A service access parameter includes download address information of service data of the digital human (an address of an MPD file on the MDP server (in the case of transmission at an adaptive bit rate) or an address of a media file on the playlist server (in the case of progressive transmission)), a transport protocol supported by the service data (for example, HTTP, SRT, RTMP, or WebSocket), and service data download delay information (for example, the service data is downloaded 100 milliseconds after uplink data is sent).

**Table 2**

| Service list | | |
|---|---|---|
| Service type (service type) | Digital human (digital human) | |
| Service genre (service genre) | Sightseeing, food, ... | |
| Linked application (linked application) | Digital human application (digital human application) | |
| Service instance (service instance information) | Digital human type | 2D digital human, 3D digital human, digital human of a cartoon image, digital human of a real-person image, custom digital human, or digital human of sign language |
| | Service access parameter | Download address information of the service data of the digital human |
| | | Transport protocol supported by the service data |
| | | Service data download delay information |
| | Content attribute (content attribute) | Language |

Step 401: The DVB-I client sends a request message to the service list server, where the request message is used to request to obtain the service list.

Optionally, the request message carries a requested service type, for example, the digital human. If the request message carries the requested service type, the service list server may search for corresponding service list information based on information about the service type, and does not need to feed back all service lists to the DVB-I client. In this manner, data processing efficiency can be improved.

Step 402: The service list server returns a response message to the DVB-I client.

If the request message in step 401 does not include a service type, the response message includes service list information configured in step 400. If the request message in step 401 includes a service type, the response message includes service list information corresponding to the service type in step 401.

Step 403: The DVB-I client displays user prompt information based on the service list information.

For understanding, refer to step 303. Details are not described herein again.

Step 404: The DVB-I client activates the linked digital human application.

Step 405: The DVB-I client sends a request message to the application server.

For determining information in the request message, refer to step 304. Details are not described herein again.

Step 406: The application server returns a response message to the DVB-I client. Optionally, the response message includes the download address information of the service data of the digital human.

If the service list information does not include the download address information URI of the service data of the digital human, to be specific, an address template of the MPD file on the MPD server or an address template of the media file on the playlist server, the application server may dynamically generate a URI, and feed back the dynamically generated URI to the DVB-I client as a download address of the service data of the digital human.

Step 407: The application server sends a message to the digital human server.

The message includes information received from the DVB-I client, to be specific, content of the request message in step 405. If the URI is dynamically generated in step 406, the message further includes the URI.

Step 408: The digital human server generates a digital human image media file based on received information.

Specifically, the digital human server may determine, based on subscription information of a user, whether to authorize generation of a custom digital human image. For example, if a user A has subscribed to use permission on the digital human service from an operator or a user A has subscribed to use permission on the digital human service from a digital human service provider, the digital human server may determine, based on subscription information of the user A, to authorize generation of a custom digital human image. In addition, the digital human server may generate, based on preference information of the user, a digital human image that meets a preference of the user. For example, if the user likes animations, the digital human server may generate a digital human of a cartoon image.

Step 409: If the service data is downloaded by using an adaptive bit rate, the digital human server segments the generated media file and generates an MPD file, and the digital human server sends the MPD file to the MPD server.

An address at which the MPD file is stored is the URI carried in the message sent in step 407.

Step 410: The digital human server sends a generated media segment to the stream server, where a storage address is an address described in the MPD file.

Step 411: The DVB-I client sends a request to the MPD server to obtain the MPD file.

Step 412: The DVB-I client sends a request to the stream server based on the MPD file to obtain the media file segment.

Step 413: The DVB-I client plays the obtained media segment.

In addition, it should be further noted that, if the service data is downloaded in a progressive manner, the digital human server may directly generate a digital human media file, and send the media file to the playlist server, where a storage address is a dynamically generated URI or a previously delivered address template. The DVB-I client sends a request message to the playlist server to obtain the service data.

The following steps are repeatedly performed until the user ends the digital human service.

Step 414: The digital human application collects user expression information.

The user expression information includes at least one of the following information: audio information, video information, and text information. The DVB-I client may collect the user expression information through a camera or a microphone on a device on which the DVB-I client resides. Optionally, the digital human application may locally analyze a user input and convert the user expression information into text.

Step 415: The digital human application sends the collected user expression information to the application server.

Certainly, the digital human application may alternatively determine, based on a current network status, whether to convert the user expression information into text.

Step 416: The digital human application sends the received user expression information to the digital human server.

Step 417: If receiving a video or speech, the digital human server analyzes the video or the speech, and then converts the video or the speech into text.

After performing semantic analysis, the digital human server generates reply text (this needs to be supported by a large language model). The reply text drives a digital human model to generate a media file. If the service data is sent by using an adaptive bit rate, the media file is segmented.

Step 418: If the MPD file is in a timeline form, the digital human server sends an updated MPD file to the MPD server.

If the MPD file is in a template form, step 418 does not need to be performed.

Step 419: The digital human server sends a media segment to the stream server.

Step 420: If the MPD file is in the timeline form, the DVB-I client requests the updated MPD file from the MPD server, and the MPD server returns the updated MPD file.

If the MPD file is in the template form, step 420 does not need to be performed.

Step 421: The DVB-I client sends a request message to the stream server based on the MPD file to obtain the media segment.

Step 422: The DVB-I client plays the obtained media segment.

In addition, it should be further noted that, if the service data is downloaded in a progressive manner, the digital human server may directly generate a digital human media file, and send the media file to the playlist server, where a storage address is a dynamically generated URI or a previously delivered address template. The DVB-I client sends a request message to the playlist server to obtain the service data.

**Embodiment 3:** A DVB-I client obtains service type indication information of a virtual image service and service instance information of the virtual image service based on a service list, and exchanges user selection information and user expression information with an uplink/downlink server (a server that supports bidirectional communication) based on the service instance information of the virtual image service. Then the uplink/downlink server transmits the user selection information and the user expression information to a virtual image service server. The virtual image service server generates media data associated with the virtual image service, and provides the media data for the DVB-I client.

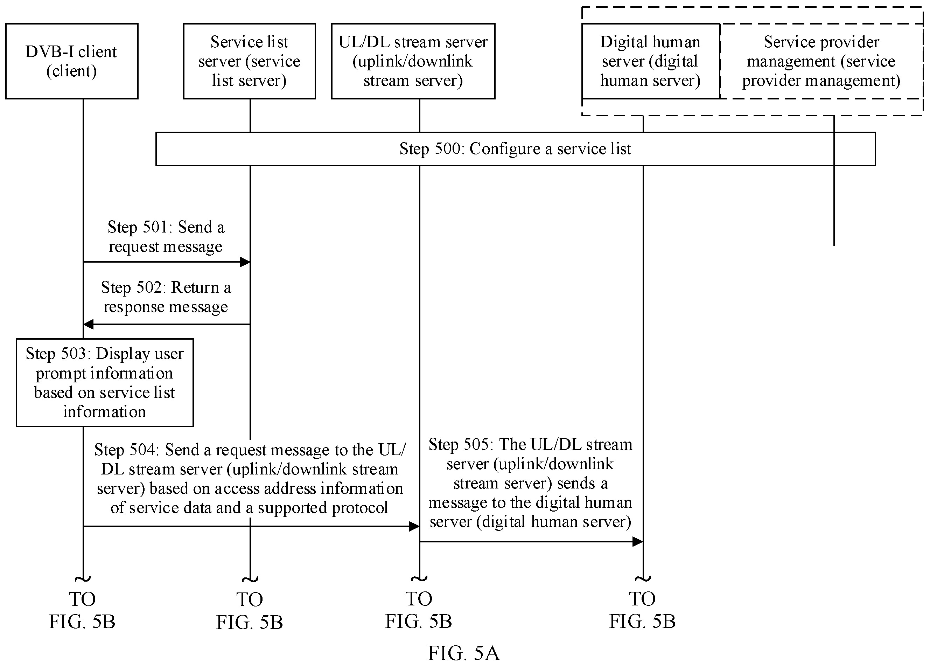

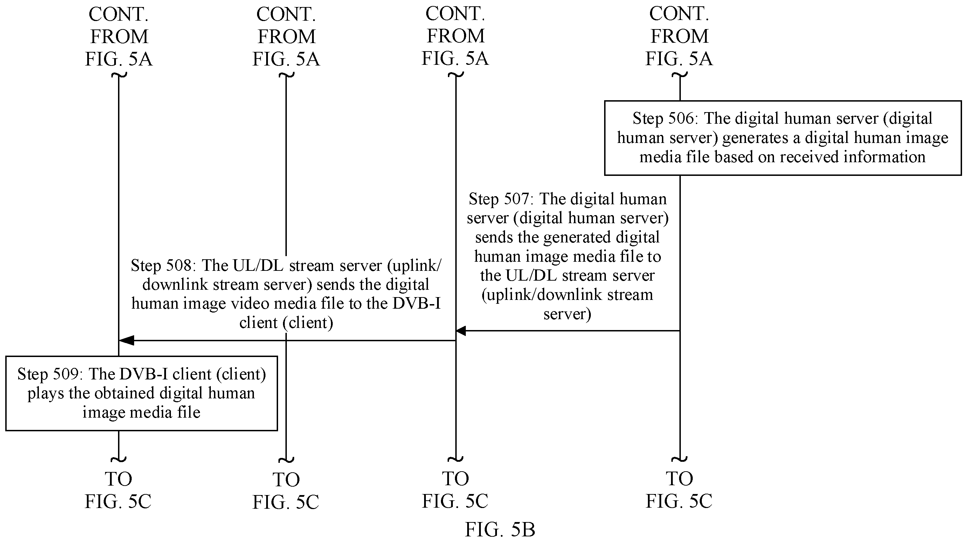

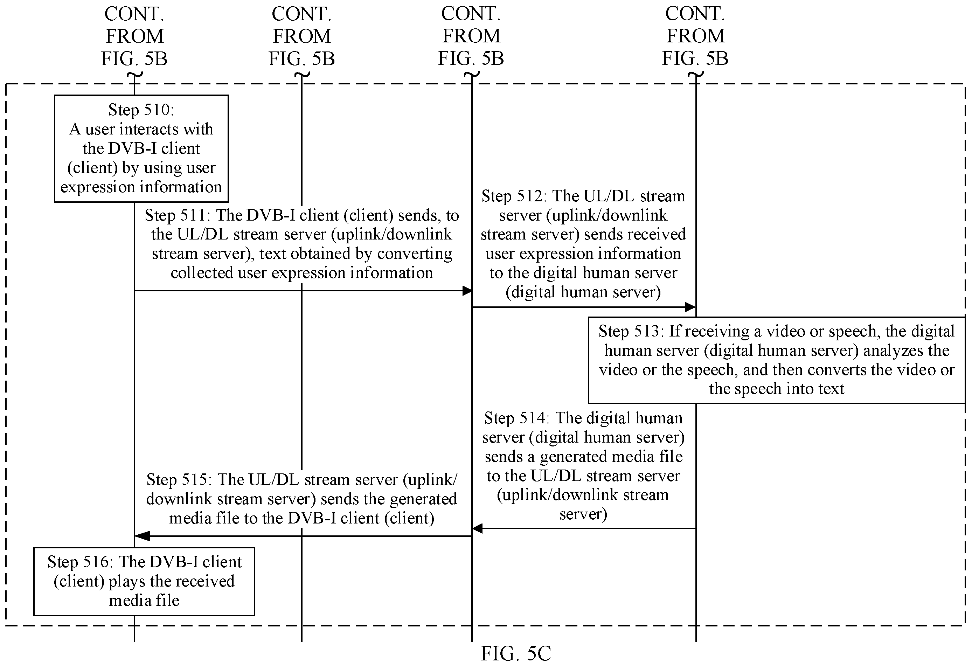

Specifically, refer to FIG. 5A to FIG. 5C for understanding. Data exchange between a DVB-I client, a service list server, a UL/DL stream server, and a digital human server is used as an example for description. The UL/DL stream server serves as a medium for message exchange between the DVB-I client and the digital human server. The digital human server is an address of a virtual image service provider, and the digital human server is a service provider. In FIG. 5A to FIG. 5C, an example in which the virtual image service is a digital human is used for description.

Step 500: Configure a service list.

In an optional embodiment, the service provider configures the service list manually offline, for example, through the digital human server. In another optional embodiment, a service provider management function interacts with the service list server to configure the service list. How to configure the service list is not specifically limited in this application.

The following Table 3 shows a service list applicable to Embodiment 3. A service type indicates that the virtual image service is a digital human. A service genre indicates a service type of the digital human, for example, sightseeing or food. A service instance (namely, service instance information) includes a supported digital human type and a bidirectional transmission parameter (namely, a service access parameter, which is understood as a bidirectional communication access parameter herein). A digital human type parameter indicates indication information of a digital human service type supported by the service instance, for example, a 2D digital human, a 3D digital human, a digital human of a cartoon image, a digital human of a real-person image, a custom digital human, or a digital human of sign language. A bidirectional delivery parameter includes the bidirectional transmission parameter, a destination address URI of uplink/downlink data, a supported transport protocol (for example, HTTP, SRT, RTMP, or WebSocket), and a supported media type, including a video, speech, or text.

**Table 3**

| Service list | | |
|---|---|---|
| Service type (service type) | Digital human (digital human) | |
| Service genre (service genre) | Sightseeing, food, ... | |
| Service instance (service instance information) | Digital human type | 2D digital human, 3D digital human, digital human of a cartoon image, digital human of a real-person image, custom digital human, or digital human of sign language |
| | Bidirectional delivery parameter | Access address information of service data of the digital human |
| | | Supported transport protocol |
| | | Supported media type |
| | Content attribute (content attribute) | Language |

Step 501: The DVB-I client sends a request message to the service list server, where the request message is used to request to obtain the service list.

Optionally, the request message carries a requested service type, for example, the digital human. If the request message carries the requested service type, the service list server may search for corresponding service list information based on information about the service type, and does not need to feed back all service lists to the DVB-I client. In this manner, data processing efficiency can be improved.

Step 502: The service list server returns a response message to the DVB-I client.

If the request message in step 501 does not include a service type, the response message includes service list information configured in step 500. If the request message in step 501 includes a service type, the response message includes service list information corresponding to the service type in step 501.

Step 503: The DVB-I client displays user prompt information based on the service list information.

Specifically, the user prompt information may prompt a user to select a specific virtual image service, for example, "Select a virtual image service type"; or may prompt a user to select a specific service type of a virtual image service, for example, "Welcome to the digital human service. Select a service type of the digital human, for example, a 2D digital human, a 3D digital human, a digital human of a cartoon image, a digital human of a real-person image, a custom digital human, or a digital human of sign language." These are merely examples for description, and do not constitute a specific limitation.

Step 504: The DVB-I client sends a request message to the UL/DL server based on the access address information of the service data and the supported transport protocol.

Optionally, the request message includes a user identifier, a device identifier, user preference information, a virtual image type selected by the user, and a language selected by the user. The user identifier may be understood as an identifier of the DVB-I client, and the identifier may identify identity information, network access information, or the like of the DVB-I client. This is merely an example for description. The user preference information is usually information collected based on a historical operation habit of the user. For example, if the user likes to watch a live sports program when watching live broadcast, the digital human server may recommend a digital human wearing a sports suit. The virtual image type selected by the user may be the digital human of the cartoon image or the like. The language selected by the user may be Chinese, English, Korean, or the like. These are merely examples for description, and the request message is not specifically limited.

Step 505: The UL/DL stream server sends a message to the digital human server.

The message includes information received from the DVB-I client, to be specific, content of the request message in step 504.

Step 506: The digital human server generates a digital human image media file (for example, a video) based on received information.

Specifically, the digital human server may determine, based on subscription information of the user, whether to authorize generation of a custom digital human image. For example, if a user A has subscribed to use permission on the digital human service from an operator or a user A has subscribed to use permission on the digital human service from a digital human service provider, the digital human server may determine, based on subscription information of the user A, to authorize generation of a custom digital human image. In addition, the digital human server may generate, based on preference information of the user, a digital human image that meets a preference of the user. For example, if the user likes animations, the digital human server may generate a digital human of a cartoon image.

Step 507: The digital human server sends the generated digital human image media file to the UL/DL stream server.

Step 508: The UL/DL stream server sends the digital human image media file (for example, the video) to the DVB-I client.

Step 509: The DVB-I client plays the obtained digital human image media file.

The following steps are repeatedly performed until the user ends the digital human service.

Step 510: The user interacts with the DVB-I client by using user expression information.

The user expression information includes at least one of the following information: audio information, video information, and text information. The DVB-I client may collect the user expression information through a camera or a microphone. The DVB-I client may locally analyze a user input and convert the user expression information into text.

Step 511: The DVB-I client sends, to the UL/DL stream server, the text obtained by converting the collected user expression information.

Certainly, the DVB-I client may alternatively determine, based on a current network status, whether to convert the user expression information into the text.

Step 512: The UL/DL stream server sends received user expression information to the digital human server.

Step 513: If receiving a video or speech, the digital human server analyzes the video or the speech, and then converts the video or the speech into text.

After performing semantic analysis, the digital human server generates reply text (this needs to be supported by a large language model). The reply text drives a digital human model to generate a media file and perform media segmentation.

Step 514: The digital human server sends the generated media file (for example, a video) to the UL/DL stream server.

Specifically, the media file may be understood as a media file associated with the user expression information. For example, the user expression information is: obtaining an interpretation of a *** scenic spot; and the media file may be a video, obtained in step 509, about a digital human interpreting the *** scenic spot. Alternatively, the user expression information is: obtaining a digital human of a cartoon image. If a digital human obtained in step 509 is not a digital human of a cartoon image, dressing or other processing may be performed on the digital human in step 509 based on the user expression information to generate a digital human of a cartoon image.

Step 515: The UL/DL stream server sends the generated media file (for example, the video) to the DVB-I client.

Step 516: The DVB-I client plays the received media file (for example, the video).

**Embodiment 4:** A DVB-I client obtains service type indication information of a virtual image service and a linked application of the virtual image service based on a service list. The DVB-I activates the linked application of the virtual image service. The application exchanges user selection information and user expression information with an application server. Then the application server transmits the user selection information and the user expression information to a virtual image service server. The virtual image service server generates media data of the virtual image service, and returns the media data to the DVB-I client.

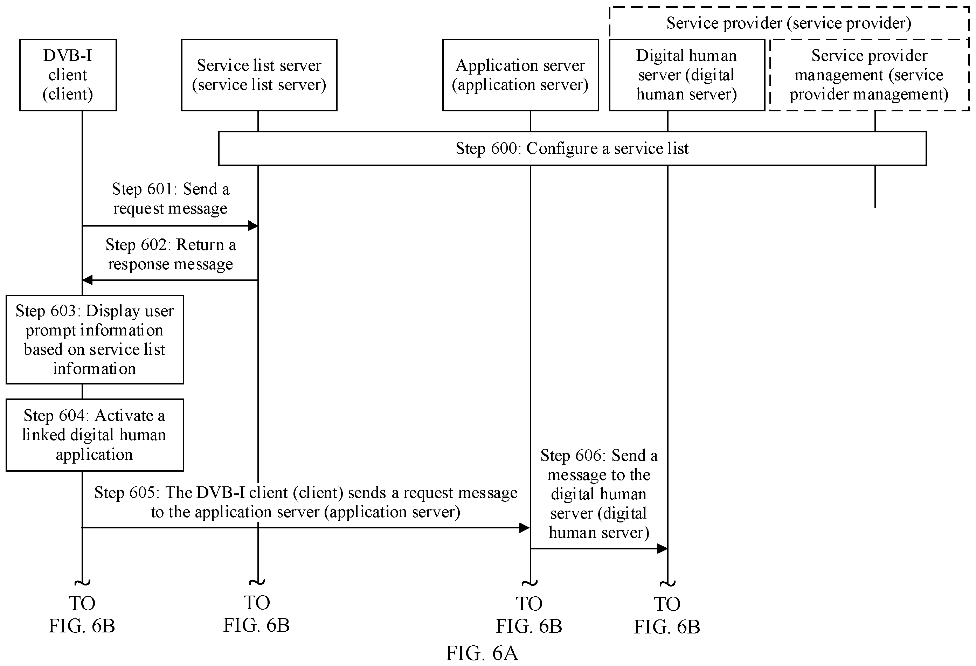

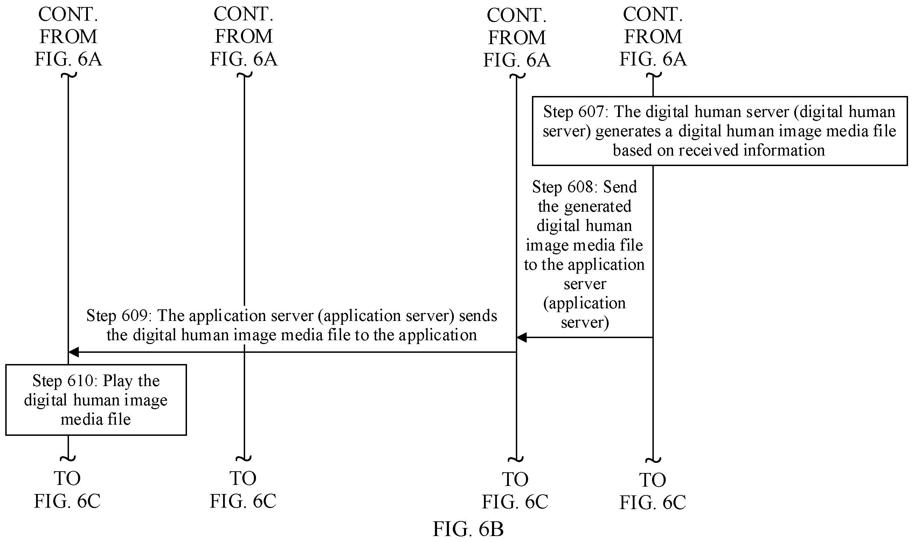

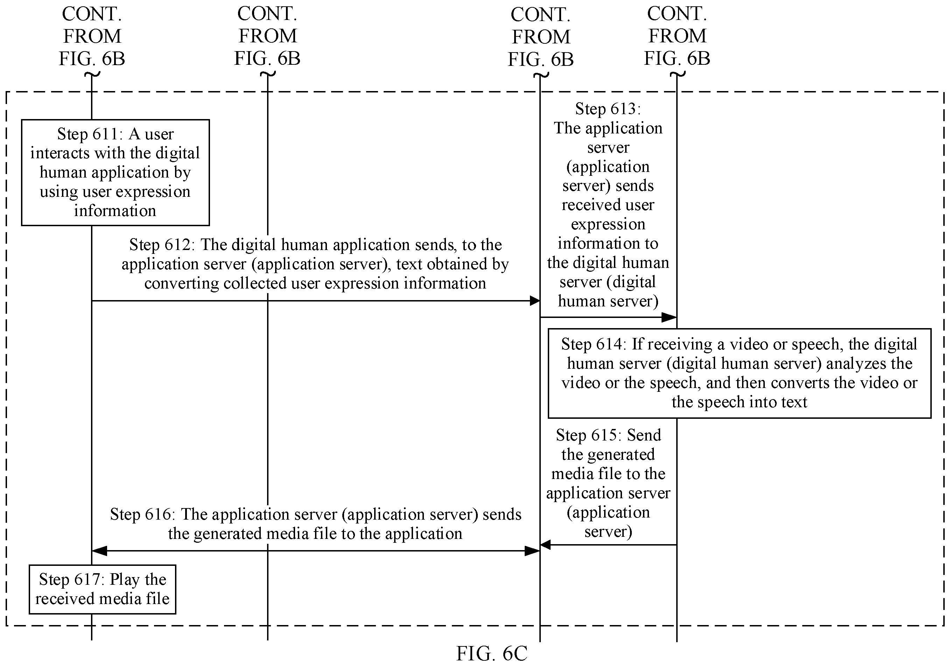

Specifically, refer to FIG. 6A to FIG. 6C for understanding. Data exchange between a DVB-I client, a service list server, an application server, and a digital human server is used as an example for description. The digital human server is a service provider. In FIG. 6A to FIG. 6C, an example in which the virtual image service is a digital human is used for description.

Step 600: Configure a service list.

In an optional embodiment, the service provider configures the service list manually offline, for example, through the digital human server. In another optional embodiment, a service provider management function interacts with the service list server to configure the service list. How to configure the service list is not specifically limited in this application.

The following Table 4 shows a service list applicable to Embodiment 4. A service type indicates that the virtual image service is a digital human, and may further indicate that the virtual image service is a 2D digital human, a 3D digital human, a digital human of a cartoon image, a digital human of a real-person image, a custom digital human, or a digital human of sign language. A service genre indicates a service type of the digital human, for example, sightseeing or food. A linked application indicates linked-application information of the virtual image service, for example, an application that supports the digital human, where the application supports uplink data transmission and service data obtaining and playing.

**Table 4**

| Service list | | |
|---|---|---|
| Service type (service type) | Digital human (digital human) | |
| Service genre (service genre) | Sightseeing, food, ... | |
| Linked application (linked application) | Digital human application (digital human application) | |

Step 601: The DVB-I client sends a request message to the service list server, where the request message is used to request to obtain the service list.

Optionally, the request message carries a requested service type, for example, the digital human. If the request message carries the requested service type, the service list server may search for corresponding service list information based on information about the service type, and does not need to feed back all service lists to the DVB-I client. In this manner, data processing efficiency can be improved.

Step 602: The service list server returns a response message to the DVB-I client.

If the request message in step 601 includes a service type, the response message includes service list information corresponding to the service type in step 601.

Step 603: The DVB-I client displays user prompt information based on the service list information.

For understanding, refer to step 303. Details are not described herein again.

Step 604: The DVB-I client activates the linked digital human application.

Step 605: The DVB-I client sends a request message to the application server.

For determining information in the request message, refer to step 304. Details are not described herein again.

Step 606: The application server sends a message to the digital human server.

The message includes information received from the DVB-I client, to be specific, content of the request message in step 605.

Step 607: The digital human server generates a digital human image media file based on received information.

Specifically, the digital human server may determine, based on subscription information of a user, whether to authorize generation of a custom digital human image. For example, if a user A has subscribed to use permission on the digital human service from an operator or a user A has subscribed to use permission on the digital human service from a digital human service provider, the digital human server may determine, based on subscription information of the user A, to authorize generation of a custom digital human image. In addition, the digital human server may generate, based on preference information of the user, a digital human image that meets a preference of the user. For example, if the user likes animations, the digital human server may generate a digital human of a cartoon image.

Step 608: The digital human server sends the generated digital human image media file to the application server.

Step 609: The application server sends the digital human image media file to the application.

Step 610: The application plays the digital human image media file.

The following steps are repeatedly performed until the user ends the digital human service.

Step 611: The digital human application collects user expression information.

The user expression information includes at least one of the following information: audio information, video information, and text information. The DVB-I client may collect the user expression information through a camera or a microphone. The digital human application may locally analyze a user input and convert the user expression information into text.

Step 612: The digital human application sends, to the application server, the text obtained by converting the collected user expression information.

Certainly, the digital human application may alternatively determine, based on a current network status, whether to convert the user expression information into the text.

Step 613: The application server sends received user expression information to the digital human server.

Step 614: If receiving a video or speech, the digital human server analyzes the video or the speech, and then converts the video or the speech into text.

After performing semantic analysis, the digital human server generates reply text (this needs to be supported by a large language model). The reply text drives a digital human model to generate a media file.

Step 615: The digital human server sends the generated media file to the application server.

Specifically, the media file may be understood as a media file associated with the user expression information. For example, the user expression information is: obtaining an interpretation of a *** scenic spot; and the video may be a video, obtained in step 610, about a digital human interpreting the *** scenic spot. Alternatively, the user expression information is: obtaining a digital human of a cartoon image. If a digital human obtained in step 610 is not a digital human of a cartoon image, dressing or other processing may be performed on the digital human in step 610 based on the user expression information to generate a digital human of a cartoon image.

Step 616: The application server sends the generated media file to the application.

Step 617: The application plays the received media file.

**Embodiment 5:** A DVB-I client obtains service type indication information of a virtual image service and service instance information of the virtual image service based on a service list, and exchanges user selection information and user expression information with an uplink server based on the service instance information of the virtual image service. Then the uplink server transmits the user selection information and the user expression information to a virtual image service server. The virtual image service server generates media data of the virtual image service, and returns the media data to the DVB-I client.

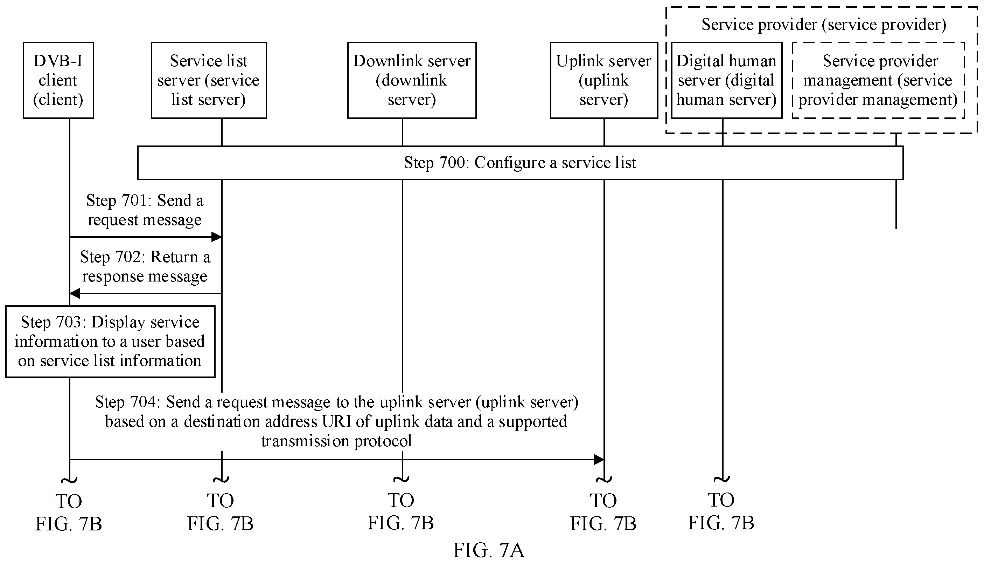

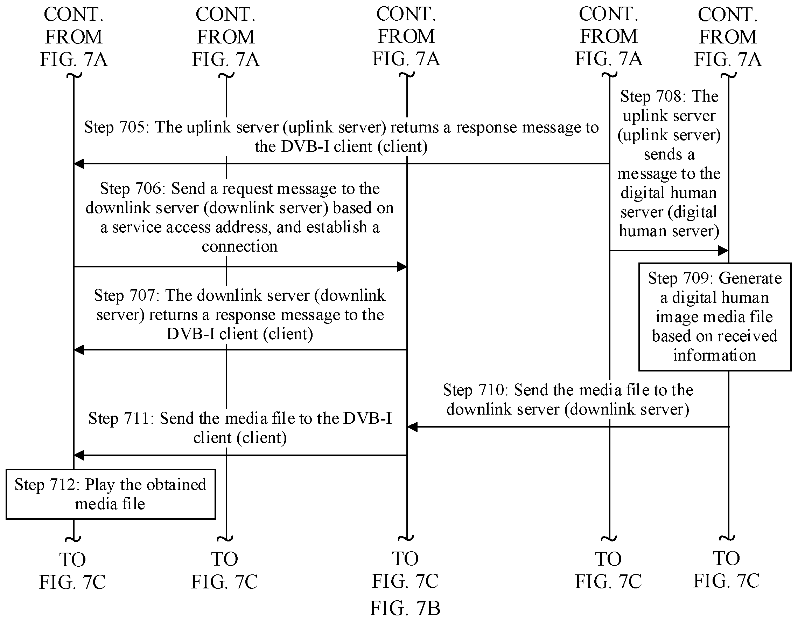

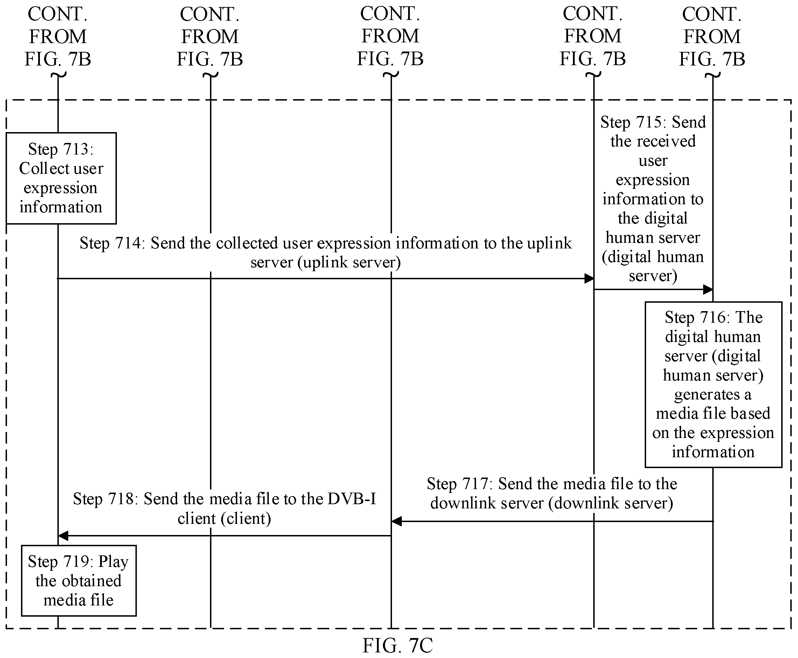

Specifically, refer to FIG. 7A to FIG. 7C for understanding. Data exchange between a DVB-I client, a service list server, an uplink server, a downlink server, and a digital human server is used as an example for description. In FIG. 7A to FIG. 7C, an example in which the virtual image service is a digital human is used for description.

Step 700: Configure a service list.

In an optional embodiment, a service provider configures the service list manually offline, for example, through the digital human server. In another optional embodiment, a service provider management function interacts with the service list server to configure the service list. How to configure the service list is not specifically limited in this application.

The following Table 5 shows a service list applicable to Embodiment 5. A service type indicates that the virtual image service is a digital human, and the service type may further indicate, in a fine-grained manner, that the virtual image service is a 2D digital human, a 3D digital human, a digital human of a cartoon image, a digital human of a real-person image, a custom digital human, or a digital human of sign language. A service genre indicates a service type of the digital human, for example, sightseeing or food. A service instance (namely, service instance information) includes a supported digital human type, an uplink transmission parameter, and a service access parameter (namely, a service data download address). If the service type indicates only the digital human, a digital human type parameter indicates indication information of a digital human service type supported by the service instance, and may be finer-grained information of the service type, for example, a 2D digital human, a 3D digital human, a digital human of a cartoon image, a digital human of a real-person image, a custom digital human, or a digital human of sign language. An uplink delivery parameter includes at least one of the following information: a destination address URI of uplink data, a transport protocol (for example, HTTP, SRT, RTMP, or WebSocket) supported by the uplink data, and a media type, for example, a video, speech, or text, supported by the uplink data. (Information that is not provided may be defined in a standard or determined based on a configuration). A service access parameter includes access address information (a template of a downlink stream pushing address, for example, https://cdn.example.com/digitalhuman_**$userid**/RTMP/) of service data of the digital human and a transport protocol supported by the service data. A content attribute indicates a language supported by the digital human service, for example, Chinese, English, or Chinese sign language.

**Table 5**

| Service list | | |
|---|---|---|
| Service type (service type) | Digital human (digital human) | |
| Service genre (service genre) | Sightseeing, food, ... | |
| Service instance (service instance information) | Digital human type | 2D digital human, 3D digital human, digital human of a cartoon image, digital human of a real-person image, custom digital human, or digital human of sign language |
| | Uplink delivery parameter | Destination address URI of the uplink data |
| | | Transport protocol supported by the uplink data |
| | | Media type supported by the uplink data |
| | Service access parameter | Access address information of the service data of the digital human |
| | | Transport protocol supported by the service data |
| | Content attribute (content attribute) | Language |

Step 701: The DVB-I client sends a request message to the service list server, where the request message is used to request to obtain the service list.

Optionally, the request message carries a requested service type, for example, the digital human. If the request message carries the requested service type, the service list server may search for corresponding service list information based on information about the service type, and does not need to feed back all service lists to the DVB-I client. In this manner, data processing efficiency can be improved.

Step 702: The service list server returns a response message to the DVB-I client, where the response message includes the service list. The service list includes the service information in Table 1.

If the request message in step 701 includes a service type, the response message includes service list information corresponding to the service type in step 701.

Step 703: The DVB-I client displays, to a user based on the service list, information about each service included in the service list.

Specifically, the displayed information may prompt the user to select a specific virtual image service, for example, a virtual image service type, a service provider, or a genre of the virtual image service. Specifically, a service type of the virtual image service may be a 2D digital human, a 3D digital human, a digital human of a cartoon image, a digital human of a real-person image, a custom digital human, a digital human of sign language, or the like. This is merely an example for description, and does not constitute a specific limitation.

Step 704: The DVB-I client sends a request message to the uplink server based on the destination address URI of the uplink data and the supported transport protocol.

Optionally, the request message includes one or more of the following information: a user identifier, a device identifier, user preference information, a virtual image type selected by the user, and a language selected by the user. The user identifier may be understood as a user identifier of the DVB-I client, and the identifier may identify identity information, network access information, or the like of the DVB-I client. This is merely an example for description. The device identifier is an identifier or an IP address of a device on which the DVB-I client resides. The user preference information is usually information collected based on a historical operation habit of the user or a parameter that is set by the user. For example, if the user likes to watch a live sports program when watching live broadcast, the digital human server may recommend a digital human wearing a sports suit. The virtual image type selected by the user may be the digital human of the cartoon image or the like. The language selected by the user may be Chinese, English, Korean, or the like, or may be Chinese sign language. These are merely examples for description, and the request message is not specifically limited.

Step 705: The uplink server returns a response message to the DVB-I client. Optionally, the response message includes the access address information of the service data of the digital human.

If the service list information does not include the access address information URI of the service data of the digital human or an address template, the uplink server may dynamically generate a URI, and feed back the dynamically generated URI to the DVB-I client as a download address of the service data of the digital human.

Step 706: The DVB-I client sends a request message to the downlink server based on the address template or the address information received in the response message, and establishes a long connection for transmission.

Step 707: The downlink server returns a response message to the DVB-I client.

Step 708: The uplink server sends a message to the digital human server.

The message includes information received from the DVB-I client, to be specific, content of the request message in step 304. In addition, the message further includes an address determined based on the address template or the address URI generated in step 705.

Step 709: The digital human server generates a digital human image media file based on received information.

Specifically, the digital human server may determine, based on subscription information of the user, whether to authorize generation of a custom digital human image. For example, if a user A has subscribed to use permission on the digital human service from an operator or a user A has subscribed to use permission on the digital human service from a digital human service provider, the digital human server may determine, based on subscription information of the user A, to authorize generation of a custom digital human image. In addition, the digital human server may generate, based on preference information of the user, a digital human image that meets a preference of the user. For example, if the user likes animations, the digital human server may generate a digital human of a cartoon image.

Step 710: The digital human server sends the media file to the downlink server. A message further includes received address information.

Step 711: The downlink server determines the established connection based on the address information, and the downlink server sends the media file to the DVB-I client through the connection.

Step 712: The DVB-I client plays the obtained media segment.

The following steps are repeatedly performed until the user ends the digital human service.

Step 713: The DVB-I client collects user expression information.

The user expression information includes at least one of the following information: audio information, video information, and text information. The device on which the DVB-I client resides may collect the user expression information through a camera or a microphone. Optionally, the DVB-I client may locally analyze a user input, and convert audio information or video information of the user into text information as the user expression information.

Step 714: The DVB-I client sends the collected user expression information to the uplink server.

Certainly, the DVB-I client may alternatively determine, based on a current network status, whether to convert the user expression information into text.

Step 715: The uplink server sends the received user expression information to the digital human server.

Step 716: The digital human server generates a media file based on the representation information. If receiving a video or speech, the digital human server analyzes the video or the speech, and then converts the video or the speech into text.

After performing semantic analysis, the digital human server generates reply text (this needs to be supported by a large language model). The reply text drives a digital human model to generate a media file.

Step 717: The digital human server sends the media file to the downlink server.

Step 718: The downlink server sends the media file to the DVB-I client through the established connection.

Step 719: The DVB-I client plays the obtained media file.

The foregoing mainly describes the solutions provided in embodiments of this application from a perspective of interaction between devices. It can be understood that, to implement the foregoing functions, each device may include corresponding hardware structures and/or software modules for performing the functions. A person skilled in the art should easily be aware that, in combination with units and algorithm steps in the examples described in embodiments disclosed in this specification, embodiments of this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application. However, it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

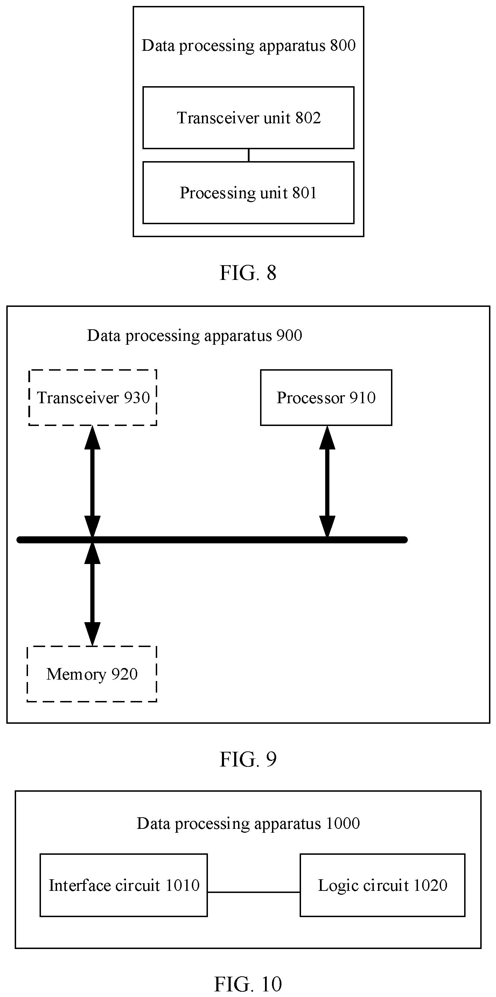

When the integrated unit is used, FIG. 8 is a possible example block diagram of a data processing apparatus according to an embodiment of this application. As shown in FIG. 8, the data processing apparatus 800 may include a processing unit 801 and a transceiver unit 802. The processing unit 801 is configured to control and manage an action of the data processing apparatus 800. The transceiver unit 802 is configured to support the data processing apparatus 800 in communicating with another device. Optionally, the transceiver unit 802 may include a receiving unit and/or a sending unit that are respectively configured to perform a receiving operation and a sending operation. Optionally, the data processing apparatus 800 may further include a storage unit, configured to store program code and/or data of the data processing apparatus 800. The transceiver unit may be referred to as an input/output unit, a communication unit, or the like, and the transceiver unit may be a transceiver. The processing unit may be a processor. When the data processing apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the terminal, the service provider, namely, the first server, or the like.

In an embodiment, the data processing apparatus is the terminal. The transceiver unit 802 is configured to obtain a service list, where the service list includes service information of a virtual image service. The processing unit 801 is configured to access the virtual image service based on the service information.

In an optional manner, the service information includes at least one of the following information: service type indication information of the virtual image service, service instance information of the virtual image service, and linked-application information of the virtual image service.

In an optional manner, when the service information includes the service instance information, the service instance information includes an uplink delivery parameter, and the uplink delivery parameter includes destination address information of uplink data.

In an optional manner, the uplink transmission parameter further includes a transport protocol supported by the uplink data and/or a media type supported by the uplink data.

In an optional manner, in addition to the uplink delivery parameter, the service instance information further includes a service access parameter, and the service access parameter includes address information for accessing service data of the virtual image service.

In an optional manner, when the service information includes the service instance information, the service instance information includes a service access parameter, and the service access parameter includes address information for accessing service data of the virtual image service.

In an optional manner, when the service information includes the service instance information and the linked-application information of the virtual image service, the service instance information includes a service access parameter, and the service access parameter includes address information for accessing service data of the virtual image service.

In an optional manner, the service access parameter further includes a transport protocol supported by the service data and/or a media type supported by the service data.

In an optional manner, the transceiver unit 802 is specifically configured to: send a first message based on the service information, where the first message is used to request the virtual image service; and receive a response message for the first message.

In an optional manner, the first message includes at least one of the following information: a user identifier, a device identifier, user preference information, a virtual image type selected by a user, and a language selected by the user.

In an optional manner, the transceiver unit 802 is further configured to: send a second message based on the service information, where the second message includes user expression information collected by the terminal; and receive a response message for the second message.

In an optional manner, the user expression information includes at least one of the following information: audio information, video information, and text information.

In an optional manner, the transceiver unit 802 is further configured to receive first service data of the virtual image service, where the first service data is service data generated by a virtual image service server based on the first message; and the processing unit 801 is further configured to play a service based on the first service data.

In an optional manner, the transceiver unit 802 is further configured to receive second service data of the virtual image service, where the second service data is service data generated by a virtual image service server based on the second message; and the processing unit 801 is further configured to play a service based on the second service data.

In an optional manner, the transceiver unit 802 is further configured to: send a third message to the address information for accessing the service data of the virtual image service; and receive a response message for the third message, where the response message includes the first service data.

In an optional manner, the transceiver unit 802 is further configured to: send a fourth message to the address information for accessing the service data of the virtual image service; and receive a response message for the fourth message, where the response message for the fourth message includes a media presentation description file of the virtual image service; and the processing unit 801 is further configured to request the first service data based on the media presentation description file.

In an optional manner, when the service information includes the linked-application information of the virtual image service, the processing unit 801 is further configured to activate a linked application of the virtual image service.

In an optional manner, the service type indication information includes at least one of the following indication information: a digital human, a 2D digital human, a 3D digital human, a digital human of a cartoon image, a digital human of a real-person image, a custom digital human, and a digital human of sign language.

In an embodiment, the data processing apparatus is the first server. The transceiver unit 802 is configured to receive first information, where the first information is used to request a virtual image service. The processing unit 801 is configured to generate first service data of the virtual image service based on the first information. The transceiver unit 802 is further configured to provide the first service data.

In an optional manner, the first information includes at least one of the following information: a user identifier, a device identifier, user preference information, a virtual image type selected by a user, and a language selected by the user.

In an optional manner, the processing unit 801 is further configured to configure a service list of a service list server, where the service list includes service information of the virtual image service.

In an optional manner, the service information includes at least one of the following information: service type indication information of the virtual image service, service instance information of the virtual image service, and linked-application information of the virtual image service.

In an optional manner, when the service information is the service instance information, the service instance information includes an uplink delivery parameter, and the uplink delivery parameter includes destination address information of uplink data.

In an optional manner, the uplink transmission parameter further includes a transport protocol supported by the uplink data and/or a media type supported by the uplink data.

In an optional manner, the service instance information further includes a service access parameter, and the service access parameter includes address information for accessing service data of the virtual image service.

In an optional manner, when the service information includes the service instance information, the service instance information includes a service access parameter, and the service access parameter includes address information for accessing service data of the virtual image service.

In an optional manner, when the service information includes the service instance information and the linked-application information of the virtual image service, the service instance information includes a service access parameter, and the service access parameter includes address information for accessing service data of the virtual image service.

In an optional manner, the service access parameter further includes a transport protocol supported by the service data and/or a media type supported by the service data.

In an optional manner, the transceiver unit 802 is further configured to receive second information, where the second information includes user expression information collected by a terminal; the processing unit 801 is further configured to generate second service data of the virtual image service based on the second information; and the transceiver unit 802 is further configured to provide the second service data.

In an optional manner, the user expression information includes at least one of the following information: audio information, video information, and text information.

In an optional manner, the service type indication information includes at least one of the following indication information: a digital human, a 2D digital human, a 3D digital human, a digital human of a cartoon image, a digital human of a real-person image, a custom digital human, and a digital human of sign language.

As shown in FIG. 9, this application further provides a data processing apparatus 900. The data processing apparatus 900 may be a chip or a chip system. The data processing apparatus may be located in a device in any one of the foregoing method embodiments, for example, the terminal or the service provider, to perform an action corresponding to the device.

Optionally, the chip system may include a chip, or may include a chip and another discrete component.

The data processing apparatus 900 includes a processor 910.

The processor 910 is configured to execute a computer program stored in a memory 920, to implement an action of each device in any one of the foregoing method embodiments.

The data processing apparatus 900 may further include the memory 920, configured to store the computer program.

Optionally, the memory 920 is coupled to the processor 910. The coupling may be an indirect coupling or a communication connection between apparatuses, units, or modules in an electrical form, a mechanical form, or another form, and is used for information exchange between the apparatuses, the units, or the modules. Optionally, the memory 920 and the processor 910 are integrated together.

There may be one or more processors 910 and one or more memories 920. This is not limited.

Optionally, during actual application, the data processing apparatus 900 may or may not include a transceiver 930. The transceiver 930 is indicated by a dashed-line box in the figure. The data processing apparatus 900 may exchange information with another device through the transceiver 930. The transceiver 930 may be a circuit, a bus, a transceiver, or any other apparatus that may be configured to exchange information.

In a possible implementation, the data processing apparatus 900 may be the first satellite or the terrestrial device in the foregoing method embodiments.

In this embodiment of this application, a specific connection medium between the transceiver 930, the processor 910, and the memory 920 is not limited. In this embodiment of this application, in FIG. 9, the memory 920, the processor 910, and the transceiver 930 are connected through a bus. The bus is represented by a bold line in FIG. 9. A manner of a connection between other components is merely an example for description, and does not constitute a limitation. The bus may be classified into an address bus, a data bus, a control bus, and the like. For ease of representation, only one bold line is used in FIG. 9 for representation, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, as shown in FIG. 10, an embodiment of this application further provides another data processing apparatus 1000, including an interface circuit 1010 and a logic circuit 1020. The interface circuit 1010 may be understood as an input/output interface, and may be configured to perform sending and receiving steps of each device in any one of the foregoing method embodiments. The logic circuit 1020 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, for example, a USB flash drive, a removable hard disk drive, a read-only memory, a random access memory, a magnetic disk, or a compact disc.

Based on the foregoing embodiments, an embodiment of this application provides a communication system. The communication system includes the terminal and the service provider in any one of the foregoing method embodiments, and may be configured to perform the method performed by each device in any one of the foregoing method embodiments.

A person skilled in the art should understand that embodiments of this application may be provided as a method, a system, or a computer program product. Therefore, this application may be implemented in a form of a hardware-only embodiment, a software-only embodiment, or an embodiment in which software and hardware are combined. In addition, this application may be implemented in a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by the computer or the processor of the another programmable data processing apparatus generate an apparatus for implementing a specific function in one or more processes in the flowcharts and/or in one or more blocks in the block diagrams.

These computer program instructions may alternatively be stored in a computer-readable memory that can indicate the computer or another programmable data processing apparatus to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more processes in the flowcharts and/or in one or more blocks in the block diagrams.

## Claims

1. A data processing method, applied to a terminal, and comprising:
obtaining a service list, wherein the service list comprises service information of a virtual image service; and
accessing the virtual image service based on the service information.

2. The method according to claim 1, wherein the service information comprises at least one of the following information: service type indication information of the virtual image service, service instance information of the virtual image service, and linked-application information of the virtual image service.

3. The method according to claim 2, wherein when the service information comprises the service instance information, the service instance information comprises an uplink delivery parameter, and the uplink delivery parameter comprises destination address information of uplink data.

4. The method according to claim 3, wherein the service instance information further comprises a service access parameter, and the service access parameter comprises address information for accessing service data of the virtual image service.

5. The method according to claim 2, wherein when the service information comprises the service instance information, the service instance information comprises a service access parameter, and the service access parameter comprises address information for accessing service data of the virtual image service.

6. The method according to claim 2, wherein when the service information comprises the service instance information and the linked-application information of the virtual image service, the service instance information comprises a service access parameter, and the service access parameter comprises address information for accessing service data of the virtual image service.

7. The method according to any one of claims 1 to 6, wherein accessing the virtual image service based on the service information comprises:
sending a first message based on the service information, wherein the first message is used to request the virtual image service; and
receiving a response message for the first message.

8. The method according to claim 7, wherein the first message comprises at least one of the following information: a user identifier, a device identifier, user preference information, a virtual image type selected by a user, and a language selected by the user.

9. The method according to any one of claims 2 to 8, further comprising:
sending a second message based on the service information, wherein the second message comprises user expression information collected by the terminal; and
receiving a response message for the second message.

10. The method according to claim 7 or 8, further comprising:
receiving first service data of the virtual image service, wherein the first service data is service data generated by a virtual image service server based on the first message; and
playing a service based on the first service data.

11. The method according to claim 9, further comprising:
receiving second service data of the virtual image service, wherein the second service data is service data generated by a virtual image service server based on the second message; and
playing a service based on the second service data.

12. The method according to claim 10, further comprising:
sending a third message to the address information for accessing the service data of the virtual image service; and
receiving a response message for the third message, wherein the response message comprises the first service data.

13. The method according to claim 10, further comprising:
sending a fourth message to the address information for accessing the service data of the virtual image service;
receiving a response message for the fourth message, wherein the response message for the fourth message comprises a media presentation description file of the virtual image service; and
requesting the first service data based on the media presentation description file.

14. The method according to claim 2 or 6, wherein when the service information comprises the linked-application information of the virtual image service, the method further comprises:
activating a linked application of the virtual image service.

15. A data processing method, applied to a first server, and comprising:
receiving first information, wherein the first information is used to request a virtual image service;
generating first service data of the virtual image service based on the first information; and
providing the first service data.

16. The method according to claim 15, wherein the first information comprises at least one of the following information: a user identifier, a device identifier, user preference information, a virtual image type selected by a user, and a language selected by the user.

17. The method according to claim 15 or 16, further comprising:
configuring a service list of the service list server, wherein the service list comprises service information of the virtual image service.

18. The method according to claim 17, wherein the service information comprises at least one of the following information: service type indication information of the virtual image service, service instance information of the virtual image service, and linked-application information of the virtual image service.

19. The method according to claim 18, wherein when the service information is the service instance information, the service instance information comprises an uplink delivery parameter, and the uplink delivery parameter comprises destination address information of uplink data.

20. The method according to claim 19, wherein the service instance information further comprises a service access parameter, and the service access parameter comprises address information for accessing service data of the virtual image service.

21. The method according to claim 18, wherein when the service information comprises the service instance information, the service instance information comprises a service access parameter, and the service access parameter comprises address information for accessing service data of the virtual image service.

22. The method according to claim 18, wherein when the service information comprises the service instance information and the linked-application information of the virtual image service, the service instance information comprises a service access parameter, and the service access parameter comprises address information for accessing service data of the virtual image service.

23. The method according to claim 15, further comprising:
receiving second information, wherein the second information comprises user expression information collected by the terminal;
generating second service data of the virtual image service based on the second information; and
providing the second service data.

24. A data processing method, comprising:
obtaining, by a terminal, a service list from a service list server, wherein the service list comprises service information of a virtual image service;
sending, by the terminal, first information to a first server of the virtual image service based on the service information, wherein the first information is used to request the virtual image service;
generating, by the first server, first service data of the virtual image service based on the first information;
providing, by the first server, the first service data for the terminal; and
playing, by the terminal, a service based on the first service data.

25. The method according to claim 24, further comprising:
sending, by the terminal, second information to the first server based on the service information, wherein the second information comprises user expression information collected by the terminal;
generating, by the first server, second service data of the virtual image service based on the second information;
providing, by the first server, the second service data for the terminal; and
playing, by the terminal, a service based on the second service data.

26. The method according to claim 24, wherein providing, by the first server, the first service data for the terminal comprises:
storing, by the first server, the first service data, wherein a first address at which the first service data is stored corresponds to address information, obtained by the terminal, for accessing service data of the virtual image service; and
obtaining, by the terminal, the first service data from the first address.

27. The method according to claim 26, wherein obtaining, by the terminal, the first service data from the first address comprises:
sending, by the terminal, a third message based on the address information for accessing the service data of the virtual image service; and
receiving, by the terminal, a response message for the third message, wherein the response message comprises the first service data.

28. The method according to claim 24, wherein providing, by the first server, the first service data comprises:
storing, by the first server, a media presentation file generated when the first service data is segmented, wherein a second address of the media presentation file corresponds to address information, obtained by the terminal, for accessing service data of the virtual image service; and further storing, by the first server, a segment of the first service data, wherein a third address at which the segment of the first service data is stored corresponds to an address described in the media presentation file; and
the method further comprises:
sending, by the terminal, a fourth message based on the address information for accessing the service data of the virtual image service;
receiving, by the terminal, a response message for the fourth message, wherein the response message comprises the media presentation description file; and
requesting, by the terminal, the first service data based on the media presentation description file.

29. The method according to any one of claims 24 to 28, wherein the service information comprises at least one of the following information: service type indication information of the virtual image service, service instance information of the virtual image service, and linked-application information of the virtual image service.

30. The method according to claim 29, wherein when the service information comprises the service instance information, the service instance information comprises an uplink delivery parameter, and the uplink delivery parameter comprises destination address information of uplink data.

31. The method according to claim 30, wherein the service instance information further comprises a service access parameter, and the service access parameter comprises the address information for accessing the service data of the virtual image service.

32. The method according to claim 29, wherein when the service information comprises the service instance information, the service instance information comprises a service access parameter, and the service access parameter comprises the address information for accessing the service data of the virtual image service.

33. The method according to claim 29, wherein when the service information comprises the service instance information and the linked-application information of the virtual image service, the service instance information comprises a service access parameter, and the service access parameter comprises the address information for accessing the service data of the virtual image service.

34. The method according to claim 29 or 33, wherein when the service information comprises the linked-application information of the virtual image service, the method further comprises:
activating a linked application, installed on the terminal, of the virtual image service.

35. The method according to any one of claims 24 to 34, wherein the first message comprises at least one of the following information: a user identifier, a device identifier, user preference information, a virtual image type selected by a user, and a language selected by the user.

36. A communication apparatus, comprising at least one processor and a memory, wherein
the memory is configured to store a computer program or instructions; and
the at least one processor is configured to execute the computer program or the instructions, to perform the method according to any one of claims 1 to 35.

37. A chip system, wherein the chip system comprises a processing circuit, and the processing circuit is coupled to a storage medium, wherein
the processing circuit is configured to: execute a part or all of computer programs or instructions in the storage medium, and implement the method according to any one of claims 1 to 35 when the part or all of the computer programs or the instructions are executed.

38. A computer-readable storage medium, wherein the computer-readable storage medium stores instructions, and when the instructions are executed by a computer, the method according to any one of claims 1 to 35 is performed.

39. A computer program product comprising a computer program or instructions, wherein when the computer program product is run on a computer, the method according to any one of claims 1 to 35 is performed.
